# EUROPÄISCHE PATENTSCHRIFT

(11) **EP 3 398 378 B1**
(45) Veröffentlichungstag und Bekanntmachung des Hinweises auf die Patenterteilung: **09.09.2020**
(21) Anmeldenummer: 16820292.7
(22) Anmeldetag: 23.12.2016
(51) Int. Cl.: H04W 48/18, H04W 8/08, H04W 12/06

(54) **VERFAHREN ZUM AUFBAUEN EINER ROAMING-VERBINDUNG**
METHOD FOR ESTABLISHING A ROAMING CONNECTION
PROCEDE DESTINE AU MONTAGE D'UNE LIAISON D'ITINERANCE

(30) Priorität: 30.12.2015 DE 102015122981; 30.12.2015 EP 15203169
(43) Veröffentlichungstag der Anmeldung: 07.11.2018
(73) Patentinhaber: Deutsche Telekom AG, 53113 Bonn (DE)
(72) Erfinder: BISCHINGER, Kurt, 1120 Wien (AT)
(74) Vertreter: Braun-Dullaeus Pannen Emmerling Patent- & Rechtsanwaltspartnerschaft mbB
(86) Internationale Anmeldenummer: PCT/EP2016/082645
(87) Internationale Veröffentlichungsnummer: WO 2017/114799

(56) Entgegenhaltungen:
- US-A1- 2004 067 735
- US-A1- 2005 276 229
- "3 rd Generation Partnership Project; Technical Specification Group Services and System Aspects; Feasibility Study on New Services and Markets Technology Enablers; Stage 1 (Release 14)", 3GPP DRAFT; TR22 891-V120-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 9. Dezember 2015 (2015-12-09), XP051071179, Gefunden im Internet: URL:http://www.3gpp.org/ftp/tsg_sa/WG1_Ser v/TSGS1_72_Anaheim/docs/ [gefunden am 2015-12-09]
- DEUTSCHE TELEKOM: "Key issue: 3GPP architecture impacts to support network slicing roaming", 3GPP DRAFT; S2-153934_NETWORK_SLICING_ROAMING, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG2, Nr. Anaheim, USA; 20151116 - 20151120 16. November 2015 (2015-11-16), XP051041140, Gefunden im Internet: URL:http://www.3gpp.org/ftp/Meetings_3GPP_ SYNC/SA2/Docs/ [gefunden am 2015-11-16]

## Beschreibung

Die vorliegende Erfindung betrifft ein Verfahren zum Aufbau einer Roaming-Verbindung eines Kommunikationsendgeräts eines fremden Kommunikationsnetzwerkes in einem besuchten Kommunikationsnetzwerk, wobei beide Netze jeweils eine Mehrzahl von Subnetzwerken aufweisen, insbesondere in einem 5G-Kommunikationsnetzwerk mit mehreren Slices. Die Erfindung betrifft ferner eine Netzwerk-Management-Entität zum Aufbau einer solchen Roaming-Verbindung.

Die fünfte Generation der mobilen Technologie (5G) betrifft die Anforderungen und technischen Herausforderungen der künftigen Kommunikationsnetze ab etwa dem Jahr 2020 und darüber hinaus. Damit wird eine vollständig mobile und vernetzte Gesellschaft angesprochen, die durch ein enormes Wachstum an Datenverkehr sowie gegenseitiger Vernetzung auf mehreren Ebenen charakterisiert ist.

In 5G werden neue Funkschnittstellen benötigt, um den Anforderungen an die Nutzung höherer Frequenzen gerecht zu werden, beispielsweise für neue Anwendungen wie Internet der Dinge (loT), spezielle Fähigkeiten wie z.B. geringerer Laufzeit, welche über das hinausgehen was 4G Kommunikationsnetze fähig sind zu leisten. Dabei wird 5G als ein Ende-zu-Ende System betrachtet, das sämtliche Netzwerkaspekte beinhaltet mit einem Design, das einen hohen Grad an Konvergenz ermöglicht. 5G wird die heutigen Zugangsmechanismen und deren mögliche Weiterentwicklungen vollständig nutzten, einschließlich der heutigen Festnetzzugangstechnologien vieler anderer noch zu entwickelnder Zugangstechnologien.

5G wird in einem stark heterogenen Umgebung operieren, d.h. mit mehreren Typen von Zugangstechnologien, mehrschichtigen Netzwerken, vielfältigen Typen von Kommunikationsgeräten und Nutzerinteraktionen etc. Verschiedenste Anwendungen mit diametralen Anforderungen sollen optimal unterstützt werden, z.B. ausfallsichere, robuste Kommunikation, Kommunikation mit geringen Datenraten oder breitbandige Kommunikation in dicht besiedelten Räumen. In solch einer Umgebung gibt es ein fundamentales Verlangen nach 5G, um ein nahtloses und konsistentes Nutzererlebnis über Zeit und Raum zu erfüllen. Für den Betreiber eines 5G Kommunikationsnetzes besteht die Notwendigkeit die eingesetzten Ressourcen optimal und dynamisch an die jeweiligen Anforderungen anzupassen, um die Vielzahl an Anwendungen gleichzeitig unterstützen zu können.

Deshalb besteht in 5G zum einen ein Bedürfnis daran, die Leistungsfähigkeit der Kommunikation zu steigern, insbesondere einen höheren Datendurchsatz, eine geringere Verzögerung, eine besonders hohe Zuverlässigkeit, eine weitaus höhere Verbindungsdichte und einen größeren Mobilitätsbereich bereitzustellen, zum anderen aber auch die Flexibilität im Betrieb zu erhöhen und maßgeschneiderte Funktionen mit dem geringst möglichen Einsatz von Mitteln bereitzustellen. Diese erhöhte Leistungsfähigkeit wird zusammen mit der Fähigkeit zur Steuerung stark heterogener Umgebungen und der Fähigkeit zur Sicherung von Vertrauens, Identität und Privatsphäre der Nutzer erwartet.

Die Druckschrift "3 rd Generation Partnership Project; Technical Specification Group Services and System Aspects; Feasibility Study on New Services and Markets Technology Enablers; Stage 1 (Release 14); TR 22.891, 9. Dezember 2015 (2015-12-09)" betrifft einen 3GPP Standard über neue Dienste und Technologien, in dem das Netzwerk-Slicing Konzept beschrieben ist.

Die Druckschrift US 2004 / 067735 A1 betrifft Verfahren zum Auswählen eines geeigneten Netzwerkressourcenknotens in einem zellularen Telekommunikationsnetzwerk.

Die Druckschrift US 2005 / 276229 A1 betrifft ein Verfahren zur Diensterkundung bzw. Service Discovery in einem Netzwerk.

Die Druckschrift "Deutsche Telekom: Key issue: 3GPP architecture impacts to support network slicing roaming; SA WG2 Meeting #112, 16-20 November 2015, Anaheim, USA" betrifft betrifft Szenarien zum Roaming in Netzwerken mit Netzwerk-Slices.

Es ist die Aufgabe der vorliegenden Erfindung, ein Konzept zu schaffen, um die Leistungsfähigkeit und Flexibilität der Kommunikation zu steigern, insbesondere beim Roaming eines Kommunikationsendgerätes, insbesondere in 5G bezüglich der oben genannten Anforderungen.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

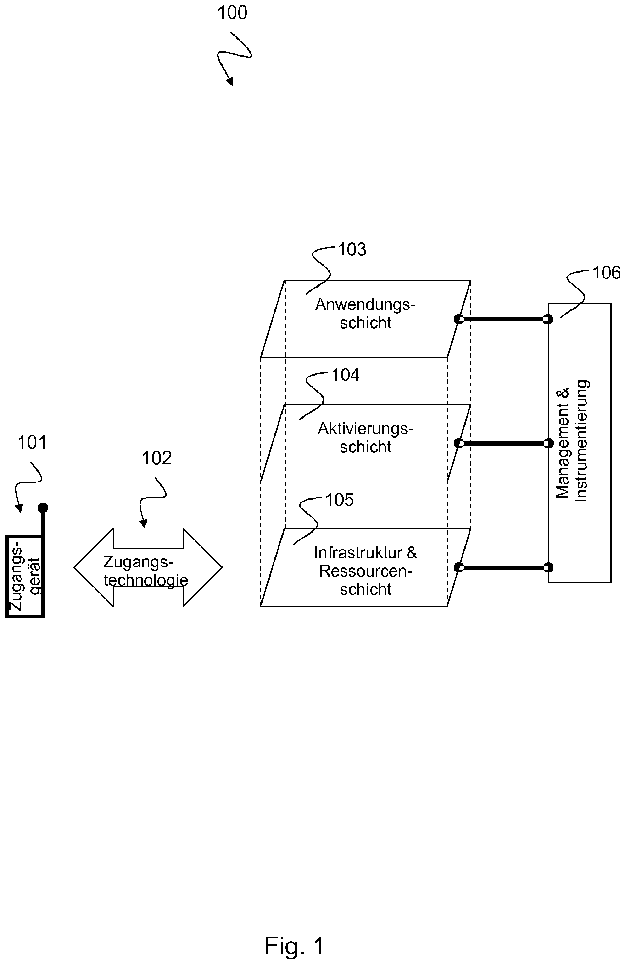

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur. Fig. 1 zeigt eine schematische Darstellung einer solchen 5G Systemarchitektur 100. Die 5G Systemarchitektur 100 umfasst einen Bereich mit 5G Kommunikationsendgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 104, 103 und der Management- & Instrumentierungsebene 106 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 106 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 106 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 106 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

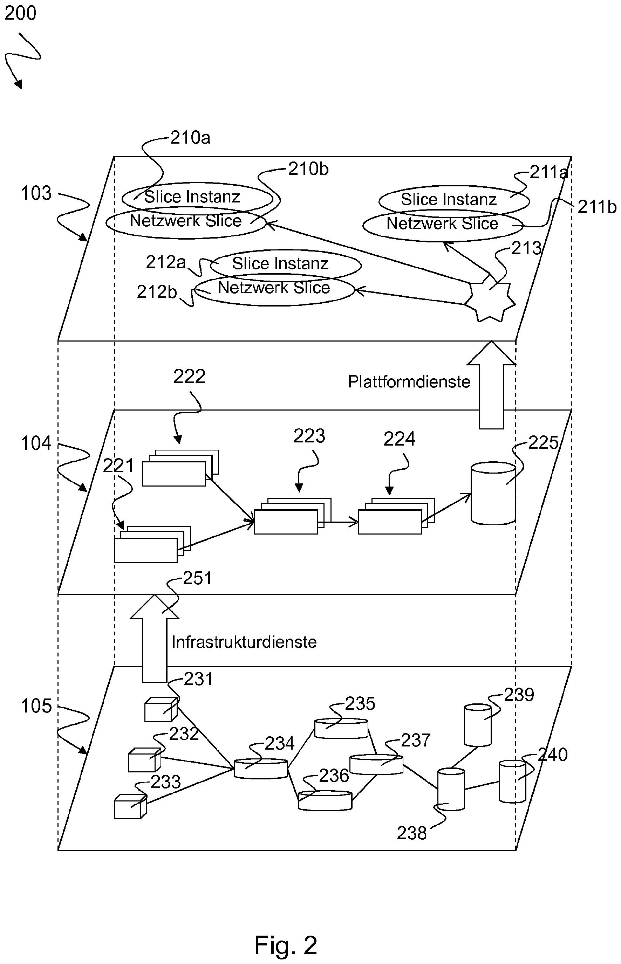

Die hier vorgestellten Geräte, Systeme und Verfahren sind dazu vorgesehen, die Kommunikation in Kommunikationsnetzen zu verbessern, insbesondere in 5G Kommunikationsnetzen mit mehreren Netzwerk Slices (Netzwerkscheiben), wie im Folgenden beschrieben. Fig. 2 zeigt eine schematische Darstellung eines 5G-Kommunikationsnetzwerks 200 mit mehreren Netzwerk Slices (Netzwerkscheiben). Das 5G-Kommunikationsnetzwerks 200 umfasst eine Infrastruktur- & Ressourcenschicht 105, eine Aktivierungsschicht 104 und eine Anwendungsschicht 103.

Die Infrastruktur- & Ressourcenschicht 105 umfasst alle physikalischen Aktiva, die einem Netzwerkbetreiber zugeordnet sind, d.h. Standorte, Kabel, Netzwerkknoten etc. Diese Schicht 105 bildet die Grundlage für alle Netzwerk Slices. Sie ist so generisch wie möglich aufgebaut ohne zu viele spezialisierte physikalische Einheiten. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Software Objekten/VNFs hinzu um das Erzeugen von jeder Art von Netzwerk Slices zu ermöglichen und so eine Plattform als Dienst der nächsthöheren Schicht 103 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekten 224 überführt werden können und in einer Objektbibliothek 225 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 104 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 104 kann als eine Art von Netzwerk-Betriebssystem betrachtet werden komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instandhalten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 103 umfasst alle erzeugten Netzwerk Slices 210b, 211b, 212b und bietet diese als "Netzwerk als Service" verschiedenen Netzwerknutzern, z.B. verschiedenen Kunden an. Das Konzept erlaubt die Wiederbenutzung von definierten Netzwerk Slices 210b, 211b, 212b für verschiedene Anwender, z.B. Kunden, beispielsweise als eine neue Netzwerk Slice Instanz 210a, 211a, 212a. D.h. ein Netzwerk Slice 210b, 211b, 212b, welcher beispielsweise einer Automotive Anwendung zugeordnet ist, kann auch für Anwendungen verschiedener anderer industrieller Anwendungen genutzt werden. Die Slices Instanzen 210a, 211a, 212a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Gemäß einem ersten Aspekt betrifft die Erfindung ein Verfahren zum Aufbauen einer Roaming-Verbindung eines Kommunikationsendgerätes eines fremden Kommunikationsnetzwerkes in einem besuchten Kommunikationsnetzwerk, wobei das fremde Kommunikationsnetzwerk und das besuchte Kommunikationsnetzwerk jeweils eine Mehrzahl von Subnetzwerken aufweisen, wobei in jedem Subnetzwerk des besuchten Kommunikationsnetzwerks eine Identifizierungsentität zur Identifizierung eines Kommunikationsgerätes angeordnet ist, wobei jedem Subnetzwerk des jeweiligen Kommunikationsnetzwerkes eine Subnetzwerk-Kennung zugeordnet ist, wobei in dem besuchten Kommunikationsnetzwerk eine Netzwerk-Management-Entität angeordnet ist, welche eine Zuordnung von Subnetzwerken zu Kommunikationsgeräten verwaltet, wobei das Verfahren die folgenden Schritte umfasst: Empfangen einer Roaming-Verbindungsanfrage von dem Kommunikationsgerät des fremden Kommunikationsnetzwerkes durch eine erste Identifizierungsentität eines ersten Subnetzwerkes des besuchten Kommunikationsnetzwerks, wobei die Roaming-Verbindungsanfrage eine Identität des Kommunikationsgerätes aufweist; Identifizieren des Kommunikationsendgerätes durch die erste Identifizierungsentität des besuchten Kommunikationsnetzwerkes auf der Basis der Identifikation des Kommunikationsgerätes; Empfangen einer fremden Subnetzwerk-Kennung eines fremden Subnetzwerkes des fremden Kommunikationsnetzwerkes durch die erste Identifizierungsentität des besuchten Kommunikationsnetzwerkes; Prüfen auf der Basis der fremden Subnetzwerk-Kennung durch die Netzwerk-Management-Entität oder durch die erste Identifizierungsentität, ob ein entsprechendes Subnetzwerk des besuchten Kommunikationsnetzes dem fremden Subnetzwerk, welches durch die fremde Subnetzwerk-Kennung angezeigt ist, entspricht; und Aussenden einer Konfigurationsanfrage nach einer Konfiguration des fremden Subnetzwerkes durch die erste Identifizierungsentität des besuchten Kommunikationsnetzwerkes an das fremde Kommunikationsnetzwerke, falls kein entsprechendes Subnetzwerk des besuchten Kommunikationsnetzes dem fremden Subnetzwerk entspricht.

Aufgrund des Subnetzwerk-Aufbaus des Kommunikationsnetzwerks kann die Leistungsfähigkeit der Kommunikation gesteigert werden. Insbesondere kann damit ein höherer Datendurchsatz, eine geringere Verzögerung, eine besonders hohe Zuverlässigkeit, eine weitaus höhere Verbindungsdichte und ein größerer Mobilitätsbereich erlangt werden und damit ein verbessertes Roaming. Zusammen mit einer erhöhten Leistungsfähigkeit können mit dem Verfahren stark heterogene Umgebungen gesteuert werden einhergehend mit der Fähigkeit zur Sicherung von Vertrauen, Identität und Privatsphäre der Nutzer, insbesondere beim Datenaustausch beim Roaming.

Gemäß einer Ausführungsform umfasst das Verfahren ferner ein Empfangen der Konfiguration des fremden Subnetzwerkes durch die erste Identifizierungsentität des besuchten Kommunikationsnetzwerkes ansprechend auf das Aussenden der Konfigurationsanfrage.

Dies bringt den Vorteil, dass der ersten Identifizierungsentität damit die Konfiguration des fremden Subnetzwerkes vorliegt und es das eigene Subnetzwerk entsprechend konfigurieren kann, damit das Kommunikationsendgerät des fremden Kommunikationsnetzes im besuchten Netz effizient kommunizieren kann.

Gemäß einer Ausführungsform umfasst das Verfahren ferner ein Prüfen auf der Basis der empfangenen Konfiguration durch die Netzwerk-Management-Entität oder durch die erste Identifizierungsentität, ob ein entsprechendes Subnetzwerk des besuchten Kommunikationsnetzwerkes dem fremden Subnetzwerk entspricht.

Dies bringt den Vorteil, dass bei positiver Prüfung gleich das entsprechende Subnetzwerk für die Kommunikation des Kommunikationsendgerätes genutzt werden kann und der Kommunikationsvorgang schnell initiiert werden kann.

Gemäß einer Ausführungsform umfasst das Verfahren ferner ein Konfigurieren eines Subnetzwerkes des besuchten Kommunikationsnetzwerkes gemäß der empfangenen Konfiguration, um ein entsprechendes Subnetzwerk zu erhalten, das dem fremden Subnetzwerk entspricht.

Dies bringt den Vorteil, dass auch im besuchten Kommunikationsnetz die Infrastruktur bereitgestellt und so konfiguriert werden kann, dass ein Kommunikationsendgerät eines fremden Netzes darin kommunizieren kann, das Roaming somit einfach und effizient ausgeführt werden kann.

Gemäß einer Ausführungsform des Verfahrens zeigt die Konfiguration zumindest eine Funktion und/oder eine Topologie des fremden Subnetzwerkes des fremden Kommunikationsnetzwerkes an, und in dem Schritt des Konfigurierens wird die Funktion auf einer Hardware-Ressource eines Subnetzwerkes des besuchten Kommunikationsnetzwerkes implementiert oder instanziiert, und/oder Hardware-Ressourcen des besuchten Kommunikationsnetzwerkes werden entsprechend der Topologie verschaltet, um ein entsprechendes Subnetzwerk des besuchten Kommunikationsnetzwerkes zu erhalten, das dem fremden Subnetzwerk entspricht.

Dies bringt den Vorteil, dass die Hardware-Ressourcen des besuchten Netzes flexibel angepasst und konfiguriert werden können, um dem Kommunikationsendgerät des fremden Netzes als Kommunikationsinfrastruktur zur Verfügung zu stehen. Das Roaming wird damit flexibel und schnell.

Gemäß einer Ausführungsform des Verfahrens ist die eine Funktion eine vordefinierte Standard-Funktion eines Subnetzwerkes.

Dies bringt den Vorteil, dass die Implementierung einfach sein kann, d.h. eine geringe Komplexität aufweist, wenn auf Standard-Funktionen zurückgegriffen werden kann.

Gemäß einer Ausführungsform des Verfahrens zeigt die Konfiguration beispielsweise eine oder mehrere der folgenden Funktion an: Authentifikation, Charging, Policy, Mobility Management, Security, Codecs, Kompressionsalgorithmen, Transcoder, Multimedia Resource Functions, beispielsweise Speech Recognition, Voice Mail System, Text to Speech Conversion, Signalisierungsprotokoll, Protokollerweiterung, Protokollumsetzung, Übertragungsprotokoll, Routingfunktion, Scheduling.

Dies bringt den Vorteil, dass mit einer Vielzahl von Funktionen gearbeitet werden kann, die in heutigen Netzen bereits üblich sind. Das Verfahren ist somit kompatibel mit den Funktionen der heutigen Netze.

Gemäß einer Ausführungsform umfasst das Verfahren ferner ein Aufbauen einer Kommunikationsverbindung über das entsprechende Subnetzwerk des besuchten Kommunikationsnetzes.

Dies bringt den Vorteil, dass das Kommunikationsendgerät über das besuchte Kommunikationsnetzwerk kommunizieren kann und somit einfach Roaming durchführen kann.

Gemäß einer Ausführungsform umfasst das Verfahren ferner ein Bereitstellen des entsprechenden Subnetzwerkes für künftige Kommunikationen über das besuchte Kommunikationsnetzwerk durch die Netzwerk-Management-Entität des besuchten Kommunikationsnetzes.

Dies bringt den Vorteil, dass das besuchte Kommunikationsnetzwerk lernen kann und mit dem Vorwissen vergangener Kommunikationsvorgänge zukünftige Kommunikationsvorgänge schneller und effizienter ausführen kann.

Gemäß einer Ausführungsform des Verfahrens umfasst der Schritt des Empfangens der fremden Subnetzwerk-Kennung das Empfangen der fremden Subnetzwerk-Kennung durch die erste Identifizierungsentität, insbesondere von dem Kommunikationsgerät oder von dem fremden Kommunikationsnetzwerk, und das Weiterleiten der fremden Subnetzwerkkennung durch die erste Identifizierungsentität an die Netzwerk-Management-Entität.

Dies bringt den Vorteil, dass fremde Subnetzwerk anhand seiner Subnetzwerkkennung leicht identifiziert werden kann, so dass auch bei einer Vielzahl an insbesondere gleichzeitigen Roaming-Vorgängen mit vielen Kommunikationsendgeräten, ein effizienter Kommunikationsaufbau möglich ist.

Gemäß einer Ausführungsform des Verfahrens ist das besuchte Kommunikationsnetzwerk ein Netzwerk einer fünften Generation (5G) oder einer weiteren Generation, und die Subnetzwerke sind Slices des besuchten Kommunikationsnetzwerkes .

Damit können alle Vorteile der 5G Netzstruktur realisiert werden, wie beispielsweise höhere Funkfrequenzen mit höherem Datendurchsatz, neue Anwendungen, wie beispielsweise Internet der Dinge, spezielle Fähigkeiten wie z.B. geringere Laufzeit, welche über das hinausgehen was 4G Kommunikationsnetze fähig sind zu leisten. Das Kommunikationsnetz kann ein Ende-zu-Ende System bieten, das sämtliche Netzwerkaspekte beinhaltet mit einem hohen Grad an Konvergenz. Ferner können die existierenden Zugangsmechanismen und deren mögliche Weiterentwicklungen vollständig genutzt werden.

Gemäß einer Ausführungsform des Verfahrens umfasst die Konfigurationsanfrage die Identität des Kommunikationsgerätes, insbesondere eine Hardware-Kennung des Kommunikationsgerätes wie IMSI oder IMEI oder elD.

Dies bietet den Vorteil, dass das Kommunikationsendgerät anhand mehrerer Kennungen einem Subnetz zugeordnet werden kann, wie beispielsweise IMSI, IMEI, eID eines Kommunikationsdienstes, einer Softwareanwendung oder einem Betriebssystem, was einen höheren Grad an Flexibilität bietet.

Subnetzwerke können unterschiedlichen Anwendungen oder Diensten zugeordnet sein, sodass das Kommunikationsendgerät in weiterer Abhängigkeit hiervon über mehrere Subnetzwerke kommunizieren kann. Die Subnetzwerke unterscheiden sich voneinander durch unterschiedliche Funktionen, Dienste oder Anwendungen.

Gemäß einer Ausführungsform des Verfahrens ist die Zuordnung von Subnetzwerk-Kennungen zu Subnetzwerken in einer Netzwerk-Management-Entität gespeichert.

Eine solche Architektur ist mit höheren Freiheitsgraden beim Design der Management-Entität verbunden. Die Aufgaben der Management-Entität können flexibel im Netzwerk verteilt werden.

Die Netzwerk-Management-Entität muss dabei nicht eine Einheit sein, die sich an einer speziellen Stelle im Netzwerk befindet. Sie kann sich auch über 2 oder mehrere Ebenen oder Slices im Kommunikationsnetzwerk erstrecken. Die Identifizierung-Entität erhält die Subnetzwerk-Kennung und irgendeine Funktionseinheit prüft, ob es bereits eine Zuordnung gibt. Diese "irgendeine Funktionseinheit" wird hier mit "Netzwerk-Management-Entität" bezeichnet. Diese Netzwerk-Management-Entität kann dabei funktional in der Control Plane (Steuerungsebene) des Kommunikationsnetzes angeordnet sein und kann beispielsweise im LTE Netz die MME sein. Im Unterschied dazu kann die Funktionalität, die Konfiguration abzufragen und einen Slice entsprechend zu konfigurieren dagegen im Netzwerkmanagementsystem bzw. OSS (Operations Support System = Netzwerkmanagement) liegen. Die oben bezeichnete Netzwerk-Management-Entität kann sich daher über zwei Ebenen erstrecken, d.h. über die Control Plane und die Netzwerkmanagementebene.

Gemäß einer Ausführungsform des Verfahrens wird die Prüfung, ob ein entsprechendes Subnetzwerk des besuchten Kommunikationsnetzes dem fremden Subnetzwerk entspricht, auf der Basis einer Korrespondenztabelle mit einer Zuordnung von Subnetzwerk-Kennungen zu Subnetzwerken und/oder auf Basis einer Funktionstabelle einer Zuordnung von Funktionen zu Subnetzwerken durch die Netzwerk-Management-Entität durchgeführt.

Dies bietet den Vorteil, dass eine solche Korrespondenztabelle beispielsweise mittels einer Look-Up Tabelle realisiert werden kann und das Abfrageergebnis damit schnell und effizient bereitgestellt werden kann.

Gemäß einem zweiten Aspekt betrifft die Erfindung eine Netzwerk-Management-Entität zum Aufbau einer Roaming-Verbindung eines Kommunikationsendgerätes eines fremden Kommunikationsnetzwerkes in einem besuchten Kommunikationsnetzwerk, wobei das fremde Kommunikationsnetzwerk und das besuchte Kommunikationsnetzwerk jeweils eine Mehrzahl von Subnetzwerken aufweisen, wobei in jedem Subnetzwerk des besuchten Kommunikationsnetzwerks eine Identifizierungsentität zur Identifizierung eines Kommunikationsgerätes angeordnet ist, wobei jedem Subnetzwerk des jeweiligen Kommunikationsnetzwerkes eine Subnetzwerk-Kennung zugeordnet ist, wobei die Netzwerk-Management-Entität die folgenden Merkmale aufweist: einem Speicher mit einer Zuordnung von Subnetzwerk-Kennungen zu Subnetzwerken des besuchten Kommunikationsnetzwerkes; eine Kommunikationsschnittstelle zum Empfangen einer fremden Subnetzwerk-Kennung des fremden Kommunikationsnetzwerks; und einem Prozessor, welcher ausgebildet ist, auf der Basis der fremden Subnetzwerk-Kennung und den vorgespeicherten Subnetzwerk-Kennungen zu prüfen, ob ein entsprechendes Subnetzwerk des besuchten Kommunikationsnetzes dem fremden Subnetzwerk entspricht; wobei die Kommunikationsschnittstelle ausgebildet ist, eine Konfigurationsanfrage nach einer Konfiguration des fremden Subnetzwerkes an das fremde Kommunikationsnetzwerk auszusenden, falls kein entsprechendes Subnetzwerk des besuchten Kommunikationsnetzes dem fremden Subnetzwerk entspricht.

Aufgrund des Subnetzwerk-Aufbaus des Kommunikationsnetzwerks kann die Leistungsfähigkeit der Kommunikation gesteigert werden. Bei Verwendung einer solchen Netzwerk-Management-Entität kann insbesondere ein höherer Datendurchsatz, eine geringere Verzögerung, eine besonders hohe Zuverlässigkeit, eine weitaus höhere Verbindungsdichte und ein größerer Mobilitätsbereich erlangt werden und damit ein verbessertes Roaming. Zusammen mit einer erhöhten Leistungsfähigkeit können mit solch einer Netzwerk-Management-Entität stark heterogene Umgebungen gesteuert werden. Die Netzwerk-Management-Entität bietet ferner die Fähigkeit zur Sicherung von Vertrauen, Identität und Privatsphäre der Nutzer, insbesondere beim Datenaustausch beim Roaming.

Der Empfang der Subnetzwerk-Kennung kann durch die Management-Entität des besuchten Netzes von der Management-Entität des fremden Netzes auf Control Plane erfolgen, die Konfigurationsanfrage kann von Management-Entität zu Management-Entität auf OSS Ebene erfolgen. Dies bietet eine höhere Flexibilität im Design.

Gemäß einer Ausführungsform der Netzwerk-Management-Entität ist die Kommunikationsschnittstelle ausgebildet, ansprechend auf das Aussenden der Konfigurationsanfrage eine Konfiguration des fremden Subnetzwerkes zu empfangen, und die Management-Entität ist ausgebildet, insbesondere mittels der Kommunikationsschnittstelle und des Prozessors ein Subnetzwerk des besuchten Kommunikationsnetzwerkes gemäß der empfangenen Konfiguration zu konfigurieren, um ein entsprechendes Subnetzwerk zu erhalten, das dem fremden Subnetzwerk entspricht.

Wie bereits oben dargestellt, muss die Netzwerk-Management-Entität dabei nicht eine Einheit sein, die sich an einer speziellen Stelle im Netzwerk befindet. Sie kann sich auch über 2 oder mehrere Ebenen oder Slices im Kommunikationsnetzwerk erstrecken. Die Identifizierung-Entität erhält die Subnetzwerk-Kennung und irgendeine Funktionseinheit prüft, ob es bereits eine Zuordnung gibt. Diese "irgendeine Funktionseinheit" wird hier mit "Netzwerk-Management-Entität" bezeichnet. Diese Netzwerk-Management-Entität kann dabei funktional in der Control Plane (Steuerungsebene) des Kommunikationsnetzes angeordnet sein und kann beispielsweise im LTE Netz die MME sein. Im Unterschied dazu kann die Funktionalität, die Konfiguration abzufragen und einen Slice entsprechend zu konfigurieren dagegen im Netzwerkmanagementsystem bzw. OSS (Operations Support System = Netzwerkmanagement) liegen. Die oben bezeichnete Netzwerk-Management-Entität kann sich daher über zwei Ebenen erstrecken, d.h. über die Control Plane und die Netzwerkmanagementebene. Eine solche Architektur ist mit höheren Freiheitsgraden beim Design der Management-Entität verbunden. Die Aufgaben der Management-Entität können flexibel im Netzwerk verteilt werden.

Weitere Ausführungsbeispiele werden Bezug nehmend auf die beiliegenden Zeichnungen erläutert. Es zeigen:
Fig. 1 eine schematische Darstellung einer 5G Systemarchitektur 100;
Fig. 2 eine schematische Darstellung eines 5G-Kommunikationsnetzwerks mit mehreren Slices (Netzwerkscheiben) 200;
Fig. 3 eine schematische Darstellung eines Kommunikationssystems 300 mit einem Kommunikationsendgerät 301 eines fremden Kommunikationsnetzwerkes 333, einem besuchten Kommunikationsnetzwerk 303 und einem fremden Kommunikationsnetzwerk 333 gemäß einer beispielhaften Ausführungsform.
Fig. 4 eine schematische Darstellung eines Verfahrens 400 zum Aufbauen einer Roaming-Verbindung eines Kommunikationsendgerätes eines fremden Kommunikationsnetzes in einem besuchten Kommunikationsnetzwerk gemäß einer beispielhaften Ausführungsform; und
Fig. 5 eine schematische Darstellung des Einbuchungsvorgangs eines Kommunikationsendgerätes in ein Kommunikationsnetz am Beispiel eines 5G-Netzes 500 gemäß einer beispielhaften Ausführungsform.

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

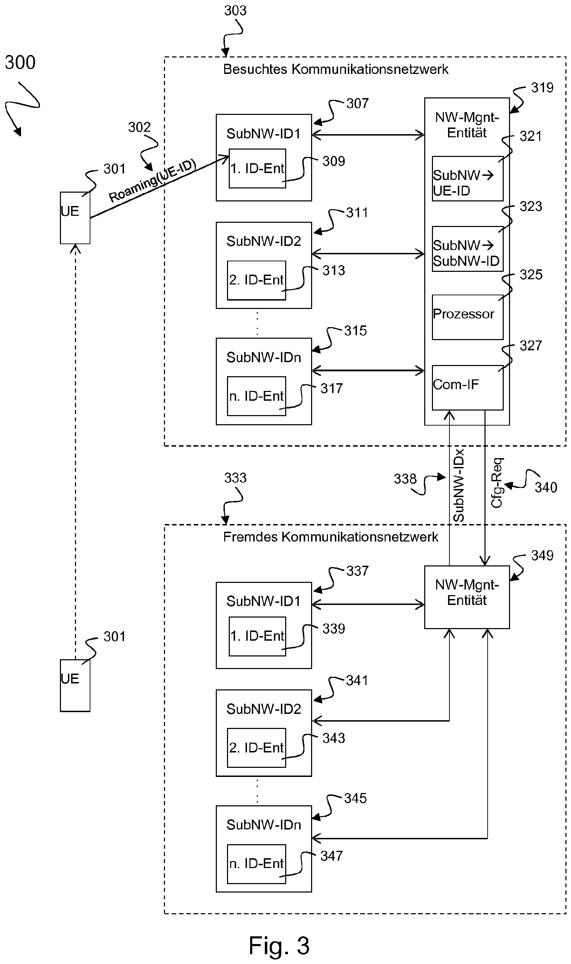

Fig. 3 zeigt eine schematische Darstellung eines Kommunikationssystems 300 mit einem Kommunikationsendgerät 301 eines fremden Kommunikationsnetzwerkes 333, einem besuchten Kommunikationsnetzwerk 303 und einem fremden Kommunikationsnetzwerk 333 gemäß einer beispielhaften Ausführungsform. Zur Erläuterung des Roaming-Verfahrens hält sich das Kommunikationsendgerät 301 des fremden Kommunikationsnetzwerkes 333 gerade im Bereich des besuchten Kommunikationsnetzwerkes 303 auf und stellt eine Roaming-Anfrage 302 an das besuchte Kommunikationsnetzwerk 303.

Das besuchte Kommunikationsnetzwerk 303 umfasst eine Mehrzahl von Subnetzwerken 307, 311, 315 mit einem ersten Subnetzwerk 307, einem zweiten Subnetzwerk 311, und weiteren Subnetzwerken, von denen beispielhaft ein n. Subnetzwerk 315 dargestellt ist. Diese Mehrzahl von Subnetzwerken entsprechen einer Mehrzahl von Slices 210b, 211b, 212b, wie oben zu Figur 1 und Figur 2 beschrieben. In dem ersten Subnetzwerk 307 ist eine erste Identifizierungsentität 309 angeordnet, an welche das Kommunikationsendgerät 301 eine Roaming-Anfrage 302 übermitteln kann, um einen Roaming-Vorgang zu initiieren. In dem zweiten Subnetzwerk 311 ist eine zweite Identifizierungsentität 313 angeordnet und in den weiteren Subnetzwerken, d.h. in bis zu dem n-ten Subnetzwerk 315 sind n-te Identifizierungsentitäten 317 angeordnet. Alternativ kann die Roaming-Anfrage 302 auch an eine der anderen Identifizierungsentitäten 313, 317 übermittelt werden.

Jedem Subnetzwerk 307, 311, 315 des besuchten Kommunikationsnetzwerkes 303 ist eine Subnetzwerk-Kennung SubNW-ID1, SubNW-ID2, ..., SubNW-IDn zugeordnet, die das entsprechende Subnetzwerk 307, 311, 315 identifiziert. Das besuchte Kommunikationsnetzwerk 303 umfasst ferner eine Management-Entität 319, welche eine Zuordnung 321 des Kommunikationsendgerätes 301 mit der Identifikation UE-ID zu einem der Subnetzwerke 307, 311, 315 verwaltet. In einer Ausführungsform gilt dies nur für eigene UEs, also UEs des Netzes 303. Für 301 als Teilnehmer eines fremden Netzes (= inbound roamer), dessen Zuordnung zu einem SubNW in seinem Heimatnetz 333 gespeichert ist, gilt das nur im weiteren Sinn, weil zu der SubNW-ID, die dem Teilnehmer von seinem Heimatnetz zugewiesen wurde in 319 eine SubNW-ID im besuchten Netz 303 gespeichert ist. In dieser Ausführungsform ist es nicht notwendig in 319 eine direkte Zuordnung UE zu SubNW-ID zu haben. In einer weiteren Ausführungsform kann 319 auch noch andere Daten für das Mapping miteinbeziehen und per UE die Zuordnung speichern.
Das fremde Kommunikationsnetzwerk 333 kann den gleichen Aufbau aufweisen wie das besuchte Kommunikationsnetzwerk 303. D.h., das fremde Kommunikationsnetzwerk 333 umfasst eine Mehrzahl von Subnetzwerken 337, 341, 345 mit einem ersten Subnetzwerk 337, einem zweiten Subnetzwerk 341, und weiteren Subnetzwerken, von denen beispielhaft ein n. Subnetzwerk 345 dargestellt ist. Diese Mehrzahl von Subnetzwerken entsprechen einer Mehrzahl von Slices 210b, 211b, 212b, wie oben zu Figur 1 und Figur 2 beschrieben. Das erste Subnetzwerk 307 umfasst eine erste Identifizierungsentität 339, das zweite Subnetzwerk 341 umfasst eine zweite Identifizierungsentität 343 und das n-te Subnetzwerk 345 umfasst eine n-te Identifizierungsentität 347. Die jeweiligen Identifizierungsentitäten 339, 343, 347 dienen der Identifizierung eines mit dem fremden Kommunikationsnetzwerk 333 Verbindung aufnehmenden Kommunikationsendgeräts 301. Ferner umfasst das fremde Kommunikationsnetzwerk 333 eine Netzwerk-Management-Entität 349, welche eine Zuordnung von Subnetzwerken 337, 341, 345 zu Kommunikationsgeräten verwaltet.

Die erste Identifizierungsentität 309 eines ersten Subnetzwerkes 307 des besuchten Kommunikationsnetzwerks 303 empfängt eine Roaming-Verbindungsanfrage 302 von dem Kommunikationsendgerät 301 des fremden Kommunikationsnetzwerkes 333, wobei die Roaming-Verbindungsanfrage 302 eine Identität bzw. Identifikation UE-ID des Kommunikationsgerätes 301 aufweist. Die erste Identifizierungsentität 309 identifiziert das Kommunikationsendgerät 301 auf der Basis der Identifikation UE-ID des Kommunikationsendgerätes 301. Die erste Identifizierungsentität 309 empfängt 338 die fremde Subnetzwerk-Kennung SubNW-IDx des fremden Subnetzwerkes 337 des fremden Kommunikationsnetzwerkes 333. Die Netzwerk-Management-Entität 319 prüft ob ein entsprechendes Subnetzwerk 307, 311, 315 des besuchten Kommunikationsnetzes 303 dem fremden Subnetzwerk 337, welches durch die fremde Subnetzwerk-Kennung SubNW-IDx angezeigt ist, entspricht. Alternativ kann diese Prüfung durch die erste Identifizierungsentität 309 erfolgen. Falls kein entsprechendes Subnetzwerk 307, 311, 315 des besuchten Kommunikationsnetzes 303 dem fremden Subnetzwerk 337 entspricht, sendet die erste Identifizierungsentität 309 eine Konfigurationsanfrage (Cfg-Req) nach einer Konfiguration des fremden Subnetzwerkes 333 an das fremde Kommunikationsnetzwerk 333 aus. Alternativ kann das Aussenden der Konfigurationsanfrage (Cfg-Req) durch die Netzwerk-Management-Entität 319 erfolgen.

Die erste Identifizierungsentität 309 des besuchten Kommunikationsnetzwerkes 303 oder alternativ die Netzwerk-Management-Entität 319 empfängt die Konfiguration des fremden Subnetzwerkes 337 ansprechend auf das Aussenden 340 der Konfigurationsanfrage Cfg-Req.

Die Netzwerk-Management-Entität 319 oder alternativ die erste Identifizierungsentität 309 prüft auf der Basis der empfangenen Konfiguration, ob ein entsprechendes Subnetzwerk 307, 311, 315 des besuchten Kommunikationsnetzwerkes 303 dem fremden Subnetzwerk 337 entspricht und konfiguriert ein Subnetzwerk 307, 311, 315 des besuchten Kommunikationsnetzwerkes 303 gemäß der empfangenen Konfiguration, um ein entsprechendes Subnetzwerk 307 zu erhalten, das dem fremden Subnetzwerk 337 entspricht.

Die Konfiguration zeigt eine Funktion und/oder eine Topologie des fremden Subnetzwerkes 337 des fremden Kommunikationsnetzwerkes 333 an. Die Funktion kann auf einer Hardware-Ressource eines Subnetzwerkes 307, 311, 315 des besuchten Kommunikationsnetzwerkes 303 implementiert oder instanziiert werden. Die Hardware-Ressourcen des besuchten Kommunikationsnetzwerkes 303 können entsprechend der Topologie verschaltet werden, um ein entsprechendes Subnetzwerk 307 des besuchten Kommunikationsnetzwerkes 303 zu erhalten, das dem fremden Subnetzwerk 337 entspricht.

Die Funktion kann eine vordefinierte Standard-Funktion eines Subnetzwerkes sein.

Die Konfiguration kann beispielsweise eine der folgenden Funktionen anzeigen: Authentifikation, Charging (Abrechnung), Policy (Art der Zuweisung), Mobility Management (Mobilitätsverwaltung), Security (Sicherheit), Codecs, Kompressionsalgorithmen, Transcoder, Multimedia Resource Functions, beispielsweise Speech Recognition (Spracherkennung), Voice Mail System (Sprachmail), Text to Speech Conversion (Umwandlung von Text in Sprache), Signalisierungsprotokoll, Protokollerweiterung, Protokollumsetzung, Übertragungsprotokoll, Routingfunktion, Scheduling (Planung).

Das besuchte Kommunikationsnetzwerk 303 kann dann eine Kommunikationsverbindung über das entsprechende Subnetzwerk 307 aufbauen.

Die Netzwerk-Management-Entität 319 des besuchten Kommunikationsnetzwerkes 303 kann das entsprechende Subnetzwerk 307 dann auch für künftige Kommunikationen über das besuchte Kommunikationsnetzwerk 303 bereitstellen.

Die fremde Subnetzwerk-Kennung SubNW-IDx kann durch die erste Identifizierungsentität 309 empfangen werden. Die fremde Subnetzwerk-Kennung SubNW-IDx kann von dem Kommunikationsendgerät 301 oder von dem fremden Kommunikationsnetzwerk 333 empfangen werden und durch die erste Identifizierungsentität 309 an die Netzwerk-Management-Entität 319 weitergeleitet werden.

Das besuchte Kommunikationsnetzwerk 303 kann ein Netzwerk einer fünften Generation (5G) oder einer weiteren Generation sein. Die Subnetzwerke 307, 311, 315 können Slices des besuchten Kommunikationsnetzwerkes 303 sein, beispielsweise wie oben zu Figur 1 und 2 beschrieben.

Die Konfigurationsanfrage Cfg-Req kann die Identität UE-ID des Kommunikationsendgerätes 301 umfassen, beispielsweise eine Hardware-Kennung des Kommunikationsendgerätes 301 wie IMSI oder IMEI oder eID.

Die Netzwerk-Management-Entität 319 kann einen Speicher 323 aufweisen, um die Zuordnung von Subnetzwerk-Kennungen SubNW-ID zu Subnetzwerken 307, 311, 315 zu speichern.

Die Netzwerk-Management-Entität 319 muss dabei nicht eine Einheit sein, die sich an einer speziellen Stelle im besuchten Kommunikationsnetzwerk 303 befindet. Sie kann sich auch über zwei oder mehrere Ebenen oder Slices im besuchten Kommunikationsnetzwerk 303 erstrecken. Die Identifizierungs-Entität 308 kann die Subnetzwerk-Kennung erhalten und irgendeine Funktionseinheit kann prüfen, ob es bereits eine Zuordnung gibt. Diese "irgendeine Funktionseinheit" wird hier mit "Netzwerk-Management-Entität" 319 bezeichnet. Diese Netzwerk-Management-Entität 319 kann dabei funktional in der Control Plane (Steuerungsebene) des besuchten Kommunikationsnetzwerkes 303 angeordnet sein und kann beispielsweise im LTE Netz die MME sein. Im Unterschied dazu kann die Funktionalität, die Konfiguration abzufragen und einen Slice entsprechend zu konfigurieren dagegen im Netzwerkmanagementsystem bzw. OSS (Operations Support System = Netzwerkmanagement) liegen. Die oben bezeichnete Netzwerk-Management-Entität 319 kann sich daher über zwei Ebenen erstrecken, d.h. über die Control Plane und die Netzwerkmanagementebene. Eine solche Architektur ist mit höheren Freiheitsgraden beim Design der Netzwerk-Management-Entität 319 verbunden. Die Aufgaben der Netzwerk-Management-Entität 319 können flexibel im Netzwerk verteilt werden.

Die Prüfung, ob ein entsprechendes Subnetzwerk 307, 311, 315 des besuchten Kommunikationsnetzes 303 dem fremden Subnetzwerk 337 entspricht, kann auf der Basis einer Korrespondenztabelle mit einer Zuordnung von Subnetzwerk-Kennungen SubNW-ID zu Subnetzwerken 307, 311, 315 und/oder auf Basis einer Funktionstabelle einer Zuordnung von Funktionen zu Subnetzwerken 307, 311, 315 durch die Netzwerk-Management-Entität 319 durchgeführt werden. Diese Zuordnungen können im Speicher 323 abgelegt sein.

Die Netzwerk-Management-Entität 319 umfasst neben dem Speicher 323 mit der Zuordnung von Subnetzwerk-Kennungen SubNW-ID zu Subnetzwerken 307, 311, 315 des besuchten Kommunikationsnetzwerkes 303 noch eine Kommunikationsschnittstelle 327 zum Empfangen 338 der fremden Subnetzwerk-Kennung SubNW-IDx des fremden Kommunikationsnetzwerks 333 und einen Prozessor 325.

Der Prozessor 325 ist dazu ausgelegt, auf der Basis der fremden Subnetzwerk-Kennung SubNW-IDx und den vorgespeicherten Subnetzwerk-Kennungen SubNW-ID zu prüfen, ob ein entsprechendes Subnetzwerk 307, 311, 315 des besuchten Kommunikationsnetzwerkes 303 einem fremden Subnetzwerk 337 des fremden Kommunikationsnetzwerks 333 entspricht.

Die Kommunikationsschnittstelle 327 ist dafür ausgelegt, eine Konfigurationsanfrage Cfg-Req nach einer Konfiguration des fremden Subnetzwerkes 337 an das fremde Kommunikationsnetzwerk 333 auszusenden, falls kein entsprechendes Subnetzwerk 307, 311, 315 des besuchten Kommunikationsnetzwerkes 303 dem fremden Subnetzwerk 337 entspricht.

Die Kommunikationsschnittstelle 327 kann ansprechend auf das Aussenden 340 der Konfigurationsanfrage Cfg-Req eine Konfiguration des fremden Subnetzwerkes 337 empfangen. Die Netzwerk-Management-Entität 319 kann mittels der Kommunikationsschnittstelle 327 und des Prozessors 325 ein Subnetzwerk 307 des besuchten Kommunikationsnetzwerkes 303 gemäß der empfangenen Konfiguration konfigurieren, um ein entsprechendes Subnetzwerk 307 zu erhalten, das dem fremden Subnetzwerk 337 entspricht.

Bezüglich des besuchten Kommunikationsnetzwerks 303 kann der Kommunikationsaufbau wie im Folgenden dargestellt erfolgen.

Die erste Identifizierungsentität 309 des ersten Subnetzwerkes 307, welches beispielsweise als Default-Subnetz mit Default-Identifizierungsentität dem Kommunikationsendgerät 301 zugeordnet ist, empfängt eine Identifikation UI-ID des Kommunikationsendgerätes 301. Diese Identifikation UI-ID identifiziert das Kommunikationsendgerät 301. Auf der Basis dieser Identifikation UI-ID identifiziert die erste Identifizierungsentität 309 das Kommunikationsendgerät 301. Die Aufgaben dieser ersten Identifizierungsentität 309 können dabei denjenigen einer MME (Mobility Management Entity) im LTE-Netz entsprechen bzw. diese umfassen. Die Identifizierung kann anhand einer IMSI oder eines damit verknüpften temporären Identifizierungsmerkmals des Kommunikationsendgeräts 301, beispielsweise eines UE erfolgen.

Danach wird von der Management-Entität 349 ein Subnetzwerk zu dem Kommunikationsendgerät 301 zugeordnet. Die ursprüngliche Zuordnung des Subnetzes erfolgt durch das Heimatnetz. Auch für die weiteren Punkte erfolgt das Bereitstellen der Parameter durch das Heimatnetz.

Die Aufgaben der Management-Entität 349 können dabei denjenigen eines HSS (Home Subscriber Server) im LTE (Long Term Evolution)-Netz entsprechen bzw. diese umfassen, d.h. die folgende Prozedur zum Verbindungsaufbau kann im Kommunikationsnetzwerk 303 mit Parametern ablaufen, die vom fremden Kommunikationsnetzwerk 333 zur Verfügung gestellt werden.

Zunächst erstellt die Management-Entität 349 Parameter, die für die Authentifizierung und in weiterer Folge für sicherheitsrelevante Abläufe, wie Verschlüsselung und Schutz der Integrität der Nachrichten, benötigt werden. Diese können ein zufälliger Wert RAND, ein Schlüssel K_{ASME}, das erwartete Ergebnis der Authentifizierungsüberprüfung XRES, sowie der Authentication Token AUTN sein. Diese 4 Parameter können als sogenannter Authentication Vector von der Management-Entität 349 an das entsprechende Subnetzwerk 307 geschickt werden.

RAND und AUTN können von der ersten Identifizierungsentität 309, beispielsweise über einen (nicht dargestellten) ersten Kommunikationsknoten, z.B. einen eNodeB (Basisstation) an das Kommunikationsendgerät 301, beispielsweise ein UE (User Equipment) gesendet werden. Der erste Kommunikationsknoten kann dabei zwischen Kommunikationsendgerät 301 und ersten Subnetzwerk 307 angeordnet sein, um eine Kommunikation des Kommunikationsendgeräts 301 zu der ersten Identifizierungsentität 309 zu ermöglichen. Ferner kann der erste Kommunikationsknoten mit weiteren Subnetzwerken 311, 315 verbunden sein, um eine Kommunikation des Kommunikationsendgerätes 301 zu weiteren Subnetzwerken 311, 315 zu ermöglichen. Der erste Kommunikationsknoten kann von dem Kommunikationsendgerät 301 beispielsweise über RAT (Radio Access Technology), z.B. WLAN, WiFi, Mobilfunk-Luftschnittstelle, etc. erreicht werden.

Das Kommunikationsendgerät 301 kann von einem auf der UICC gespeicherten geheimen Schlüssel ebenso einige Parameter, wie z.B. den K_{ASME}, ableiten, die es ihm erlauben, mithilfe des AUTN die Authentizität des Kommunikationsnetzes 303 zu überprüfen und aus RAND und K_{ASME} über einen bestimmten Algorithmus den Wert RES zu errechnen. Dieser Wert kann dann, beispielsweise über den ersten Kommunikationsknoten, zur ersten Identifizierungsentität 309 geschickt werden. Sind RES und XRES gleich, schickt die erste Identifizierungsentität 309 eine Nachricht an die Management-Entität 349, um dieser mitzuteilen, dass die Authentifizierung des Kommunikationsendgeräts 301 positiv abgeschlossen wurde. Die Management-Entität kann darauf hin eine Liste für dieses Kommunikationsendgerät 301 mit erlaubten Verbindungen (PDN Subscription Contexts mit QoS profiles) an die erste Identifizierungs-Entität 309 schicken.

Daraufhin kann die erste Identifizierungs-Entität 309 einen Default Träger (beispielsweise eine IP Verbindung) vom Kommunikationsendgerät 301 aufbauen, beispielsweise über ein Serving-Gateway (S-GW) zu eine Packet Data Network-Gateway (PDN-GW) und das Kommunikationsendgerät 301 über den erfolgreichen Einbuchungsvorgang informieren.

Nun kann das Kommunikationsendgerät 301 über das Kommunikationsnetzwerk 303 kommunizieren. Weitere Verbindungsanforderungen vom PDN-GW oder Kommunikationsendgerät 301 für zusätzliche Träger oder Modifikationen der bestehenden Träger können von der ersten Identifizierungs-Entität 309 auf Basis der von der Management-Entität 349 empfangenen Daten autorisiert werden.

Die Kommunikationsverbindung kann über das zweite Subnetzwerk 311 aufgebaut werden, falls die der übermittelten Identifikation UE-ID auf Basis der von der fremden Netzwerk-Management-Entität 349 von der Netzwerk-Management-Entität 319 zugeordnete Subnetzwerk-Kennung SubNW-ID die Subnetzwerk-Kennung SubNW-ID2 des zweiten Subnetzwerkes 311 ist.

Alternativ kann die Kommunikationsverbindung über das n-te Subnetzwerk 315 aufgebaut werden, falls die der übermittelten Identifikation UE-ID auf Basis der von der fremden Netzwerk-Management-Entität 349 von der Netzwerk-Management-Entität 319 zugeordnete Subnetzwerk-Kennung SubNW-ID die Subnetzwerk-Kennung SubNW-IDn des n-ten Subnetzwerkes 315 ist.

Die Management-Entität 319 kann die Zuordnung der Subnetzwerk-Kennung SubNW-ID zu dem Kommunikationsendgerät 301 auf der Basis einer oder mehrerer der folgenden Zuordnungen bewirken: einer Zuordnung der Identifikation UE-ID des Kommunikationsendgerätes 301, beispielsweise einer Hardware-Kennung des Kommunikationsgerätes 301 wie IMSI oder IMEI oder eID zu der Subnetzwerk-Kennung SubNW-ID und/oder einer Zuordnung eines Kommunikationsdienstes zu dem Kommunikationsendgerät 301 und/oder einer Zuordnung einer Softwareanwendung zu dem Kommunikationsendgerät 301 und/oder eines Betriebssystems des Kommunikationsendgeräts 301 und/oder der Zuordnung der SubNW-ID durch das fremde Netz zu dem Kommunikationsendgerät 301 zu einem der beiden Subnetzwerke 307, 311. Das Heimatnetz 333 ordnet dem UE die eigenen Subnetzwerke 337, 341 zu, diese werden im besuchten Netz 303 auf Subnetze 307, 311 gemappt. Das besuchte Netz kann noch weitere Parameter miteinbeziehen oder diese Info auch komplett ignorieren.

Subnetzwerke können unterschiedlichen Anwendungen oder Diensten zugeordnet sein, sodass das Kommunikationsendgerät 301 in weiterer Abhängigkeit hiervon über mehrere Subnetzwerke 307, 311, 315 kommunizieren kann. Die Subnetzwerke können sich voneinander durch unterschiedliche Funktionen, Dienste oder Anwendungen unterscheiden.

Das Kommunikationsendgerät 301 kann die Identifikation 302 des Kommunikationsgerätes 301 zu der ersten 309 oder der zweiten 313 Identifizierungsentität zusammen mit der Subnetzwerk-Kennung SubNW-ID, welche das dem Kommunikationsendgerät 301 zugeordnete Subnetzwerk 307, 311, 315 anzeigt, an die erste Identifizierungsentität 309 oder die anderen Identifizierungsentitäten 313, 317 übermitteln. Die erste Identifizierungsentität 309 kann darauf die Identifikation UE-ID des Kommunikationsgerätes 301 und die Subnetzwerk-Kennung SubNW-ID1 des ersten Subnetzes 307 an die Management-Entität 319 übermitteln. Die gleiche Funktionalität gilt auch für die anderen Identifizierungsentitäten 313, 317. Die Management-Entität 319 kann darauf die Identifikation UE-ID des Kommunikationsgerätes 301 und die ursprünglich vom fremden Kommunikationsnetz zugeordnete SubNW-ID1 des ersten Subnetzes 337 auf Basis der Zuordnung 323 übermitteln. Dem UE wurde vor diesem Schritt bereits die gemappte SubNW-ID übertragen. Bei einer Verifizierung sollte das Mapping wieder rückgängig gemacht werden, bevor die Nachricht an die Netzwerk-Management-Entität 349 des Heimatnetzes 333 weitergeht.

Beim Zuordnen eines Subnetzwerkes zu dem Kommunikationsendgerät 301 kann die Management-Entität 319 die der Identifikation 302 des Kommunikationsgerätes 301 zugeordnete Subnetzwerk-Kennung an die erste Identifizierungsentität 309 übermitteln. Falls die der Identifikation UE-ID des Kommunikationsendgerätes 301 zugeordnete Subnetzwerk-Kennung SubNW-ID und die Subnetzwerk-Kennung SubNW-ID1 des ersten Subnetzwerkes 307 unterschiedlich sind, kann die erste Identifizierungsentität 309 die übermittelte Subnetzwerk-Kennung SubNW-ID an das Kommunikationsendgerät 301 übermitteln. Falls die der Identifikation UE-ID des Kommunikationsendgerätes 301 zugeordnete Subnetzwerk-Kennung SubNW-ID und die Subnetzwerk-Kennung SubNW-ID1 des ersten Subnetzwerkes 307 unterschiedlich sind, kann die erste Identifizierungsentität 309 die übermittelte Subnetzwerk-Kennung an die zweite Identifizierungsentität 313 übermitteln.

Beim Aufbauen der Kommunikationsverbindung über das zweite Subnetzwerk 311 kann das Kommunikationsendgerät 301 die Identifikation UE-ID an die zweite Identifizierungsentität 313 übermitteln.

Die Kommunikationsverbindung über das erste Subnetzwerk 307 kann durch die erste Identifizierungsentität 309 aufgebaut werden; die Kommunikationsverbindung über das zweite Subnetzwerk 311 kann durch die zweite Identifizierungsentität 313 aufgebaut werden. Die Kommunikationsverbindung über das n-te Subnetzwerk 315 kann durch die n-te Identifizierungsentität 317 aufgebaut werden. Alternativ können diese Kommunikationsverbindungen auch mit Hilfe des Kommunikationsendgerätes 301 aufgebaut werden.

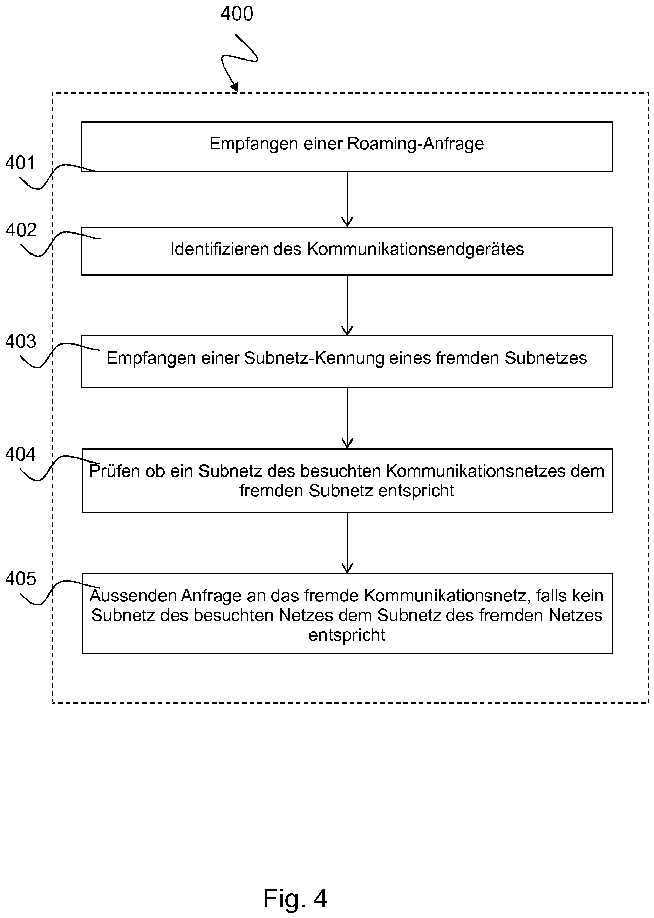

Fig. 4 zeigt eine schematische Darstellung eines Verfahrens 400 zum Aufbauen einer Roaming-Verbindung eines Kommunikationsendgerätes 301 eines fremden Kommunikationsnetzes 333 in einem besuchten Kommunikationsnetzwerk 303 gemäß einer beispielhaften Ausführungsform.

Das besuchte Kommunikationsnetzwerk 303 kann dem oben zu Figur 3 beschriebenen besuchten Kommunikationsnetzwerk 303 entsprechen. D.h., das besuchte Kommunikationsnetzwerk 303 umfasst eine Mehrzahl von Subnetzwerken 307, 311, 315 mit einem ersten Subnetzwerk 307 und einem zweiten Subnetzwerk 311. In dem ersten Subnetzwerk 307 ist eine erste Identifizierungsentität 309 zur Identifizierung des Kommunikationsgerätes 301 angeordnet und in dem zweiten Subnetzwerk 311 ist eine zweite Identifizierungsentität 313 zur Identifizierung des Kommunikationsgerätes 301 angeordnet. Jedem Subnetzwerk 307, 311, 315 des besuchten Kommunikationsnetzwerkes 303 ist eine Subnetzwerk-Kennung zugeordnet. In dem besuchten Kommunikationsnetzwerk 303 ist eine Netzwerk-Management-Entität 319 angeordnet, welche eine Zuordnung 321 des Kommunikationsendgerätes 301 zu einem der Subnetzwerke 307, 311, 315 verwaltet.

In gleicher Weise kann das fremde Kommunikationsnetzwerk 333 dem oben zu Figur 3 beschriebenen fremden Kommunikationsnetzwerk 333 entsprechen.

Das Verfahren 400 umfasst ein Empfangen 401 einer Roaming-Verbindungsanfrage 302 von dem Kommunikationsendgerät 301 des fremden Kommunikationsnetzwerkes 333 durch eine erste Identifizierungsentität 309 eines ersten Subnetzwerkes 307 des besuchten Kommunikationsnetzwerks 303, wobei die Roaming-Verbindungsanfrage 302 eine Identität UE-ID des Kommunikationsendgerätes 301 aufweist.

Das Verfahren 400 umfasst ferner ein Identifizieren 402 des Kommunikationsendgerätes 301 durch die erste Identifizierungsentität 309 des besuchten Kommunikationsnetzwerkes 303 auf der Basis der Identifikation UE-ID des Kommunikationsendgerätes 301.

Das Verfahren 400 umfasst ferner ein Empfangen 403, 338 einer fremden Subnetzwerk-Kennung SubNW-IDx eines fremden Subnetzwerkes 337 des fremden Kommunikationsnetzwerkes 333 durch die erste Identifizierungsentität 309 des besuchten Kommunikationsnetzwerkes 303.

Das Verfahren 400 umfasst ferner ein Prüfen auf der Basis 404 der fremden Subnetzwerk-Kennung SubNW-IDx durch die Netzwerk-Management-Entität 319 oder durch die erste Identifizierungsentität 309, ob ein entsprechendes Subnetzwerk 307, 311, 315 des besuchten Kommunikationsnetzwerkes 303 dem fremden Subnetzwerk 337, welches durch die fremde Subnetzwerk-Kennung SubNW-IDx angezeigt ist, entspricht.

Das Verfahren 400 umfasst ferner ein Aussenden 405, 340 einer Konfigurationsanfrage (Cfg-Req) nach einer Konfiguration des fremden Subnetzwerkes 333 durch die erste Identifizierungsentität 309 oder durch die Netzwerk-Management-Entität 319 des besuchten Kommunikationsnetzwerkes 303 an das fremde Kommunikationsnetzwerk 333, falls kein entsprechendes Subnetzwerk 307, 311, 315 des besuchten Kommunikationsnetzes 303 dem fremden Subnetzwerk 337 entspricht.

Das Verfahren 400 kann ferner ein Empfangen der Konfiguration des fremden Subnetzwerkes 337 durch die erste Identifizierungsentität 309 des besuchten Kommunikationsnetzwerkes 303 ansprechend auf das Aussenden 340 der Konfigurationsanfrage (Cfg-Req) umfassen.

Das Verfahren 400 kann ferner umfassen: Prüfen auf der Basis der empfangenen Konfiguration durch die Netzwerk-Management-Entität 319 oder durch die erste Identifizierungsentität 309, ob ein entsprechendes Subnetzwerk 307, 311, 315 des besuchten Kommunikationsnetzwerkes 303 dem fremden Subnetzwerk 337 entspricht.

Das Verfahren 400 kann ferner umfassen: Konfigurieren eines Subnetzwerkes 307, 311, 315 des besuchten Kommunikationsnetzwerkes 303 gemäß der empfangenen Konfiguration, um ein entsprechendes Subnetzwerk 307 zu erhalten, das dem fremden Subnetzwerk 337 entspricht.

Die Konfiguration kann eine Funktion und/oder eine Topologie des fremden Subnetzwerkes 337 des fremden Kommunikationsnetzwerkes 333 anzeigen. Beim Konfigurieren kann die Funktion auf einer Hardware-Ressource eines Subnetzwerkes 307, 311, 315 des besuchten Kommunikationsnetzwerkes 303 implementiert oder instanziiert werden. Die Hardware-Ressourcen des besuchten Kommunikationsnetzwerkes 303 können entsprechend der Topologie verschaltet werden, um ein entsprechendes Subnetzwerk 307 des besuchten Kommunikationsnetzwerkes 303 zu erhalten, das dem fremden Subnetzwerk 337 entspricht. Die Funktion kann eine vordefinierte Standard-Funktion eines Subnetzwerkes sein.

Die Konfiguration kann beispielsweise eine der folgenden Funktionen anzeigen: Authentifikation, Charging (Abrechnung), Policy (Art der Zuweisung), Mobility Management (Mobilitätsverwaltung), Security (Sicherheit), Codecs, Kompressionsalgorithmen, Transcoder, Multimedia Resource Functions, beispielsweise Speech Recognition (Spracherkennung), Voice Mail System (Sprachmail), Text to Speech Conversion (Umwandlung von Text in Sprache), Signalisierungsprotokoll, Protokollerweiterung, Protokollumsetzung, Übertragungsprotokoll, Routingfunktion, Scheduling (Planung).

Das Verfahren 400 kann ferner umfassen: Aufbauen einer Kommunikationsverbindung über das entsprechende Subnetzwerk 307 des besuchten Kommunikationsnetzwerkes 303.

Das Verfahren 400 kann ferner umfassen: Bereitstellen des entsprechenden Subnetzwerkes 307 für künftige Kommunikationen über das besuchte Kommunikationsnetzwerk 303 durch die Netzwerk-Management-Entität 319 des besuchten Kommunikationsnetzwerkes 303.

Der Schritt des Empfangens 338 der fremden Subnetzwerk-Kennung SubNW-IDx kann das Empfangen 338 der fremden Subnetzwerk-Kennung SubNW-IDx durch die erste Identifizierungsentität 309 umfassen, insbesondere von dem Kommunikationsendgerät 301 oder von dem fremden Kommunikationsnetzwerk 333, und ferner das Weiterleiten der fremden Subnetzwerkkennung SubNW-IDx durch die erste Identifizierungsentität 309 an die Netzwerk-Management-Entität 319 umfassen.

Das besuchte Kommunikationsnetzwerk 303 kann ein Netzwerk einer fünften Generation (5G) oder einer weiteren Generation sein. Die Subnetzwerke 307, 311, 315 können Slices des besuchten Kommunikationsnetzwerkes 303 sein, beispielsweise wie in Figur 1 und 2 beschrieben.

Die Konfigurationsanfrage Cfg-Req kann die Identität UE-ID des Kommunikationsendgerätes 301 umfassen, beispielsweise eine Hardware-Kennung des Kommunikationsendgerätes 301 wie IMSI oder IMEI oder eID.

Die Zuordnung von Subnetzwerk-Kennungen SubNW-ID zu Subnetzwerken 307, 311, 315 kann in der Netzwerk-Management-Entität 319 gespeichert sein.

Wie oben zu Figur 3 beschrieben, muss die Netzwerk-Management-Entität 319 dabei nicht eine Einheit sein, die sich an einer speziellen Stelle im besuchten Kommunikationsnetzwerk 303 befindet. Sie kann sich auch über zwei oder mehrere Ebenen oder Slices im besuchten Kommunikationsnetzwerk 303 erstrecken. Die Identifizierungs-Entität 308 kann die Subnetzwerk-Kennung erhalten und irgendeine Funktionseinheit kann prüfen, ob es bereits eine Zuordnung gibt. Diese "irgendeine Funktionseinheit" wird hier mit "Netzwerk-Management-Entität" 319 bezeichnet. Diese Netzwerk-Management-Entität 319 kann dabei funktional in der Control Plane (Steuerungsebene) des besuchten Kommunikationsnetzwerkes 303 angeordnet sein und kann beispielsweise im LTE Netz die MME sein. Im Unterschied dazu kann die Funktionalität, die Konfiguration abzufragen und einen Slice entsprechend zu konfigurieren dagegen im Netzwerkmanagementsystem bzw. OSS (Operations Support System = Netzwerkmanagement) liegen. Die oben bezeichnete Netzwerk-Management-Entität 319 kann sich daher über zwei Ebenen erstrecken, d.h. über die Control Plane und die Netzwerkmanagementebene. Eine solche Architektur ist mit höheren Freiheitsgraden beim Design der Netzwerk-Management-Entität 319 verbunden. Die Aufgaben der Netzwerk-Management-Entität 319 können flexibel im Netzwerk verteilt werden.

Die Prüfung, ob ein entsprechendes Subnetzwerk 307, 311, 315 des besuchten Kommunikationsnetzes 303 dem fremden Subnetzwerk 337 entspricht, kann auf der Basis einer Korrespondenztabelle mit einer Zuordnung von Subnetzwerk-Kennungen SubNW-ID zu Subnetzwerken 307, 311, 315 und/oder auf Basis einer Funktionstabelle einer Zuordnung von Funktionen zu Subnetzwerken 307, 311, 315 durch die Netzwerk-Management-Entität 319 durchgeführt werden.

Die UE zu SubNW-ID Zuordnung kann unter Einbeziehung der Zuordnung aus dem Heimatnetz passieren und somit einen verallgemeinerten Fall des Mappings darstellen.

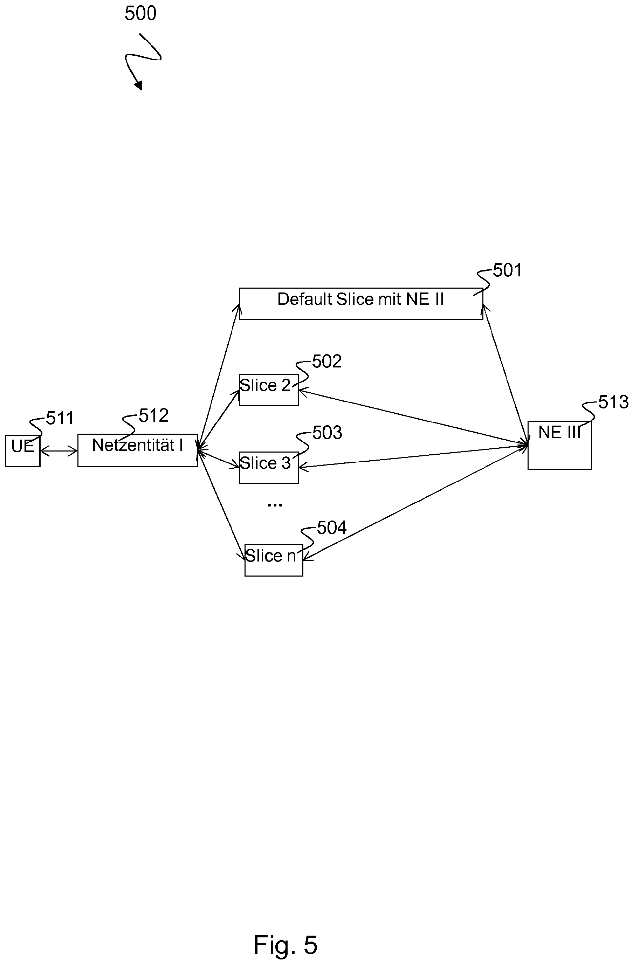

Fig. 5 zeigt eine schematische Darstellung des Einbuchungsvorgangs eines Kommunikationsendgerätes in ein Kommunikationsnetz am Beispiel eines 5G-Netzes 500 gemäß einer beispielhaften Ausführungsform. Das 5G-Netz 500 umfasst ein UE 511, eine erste Netzentität 512 bzw. Netzwerkentität, eine Mehrzahl von Slices 501, 502, 503, 504, denen jeweils eine zweite Netzentität zugeordnet ist, und eine dritte Netzentität 513. Das UE (User Equipment) ist ein Beispiel eines wie oben zu den Figuren 3 und 4 beschriebenen Kommunikationsendgeräts 301. Die erste Netzentität 512 kann dem oben zu Figur 3 beschriebenen ersten Kommunikationsknoten entsprechen. Es kann sich dabei beispielsweise um einen eNodeB bzw. eine Basisstation handeln. Die Slices 501, 502, 503, 504 können den oben zu Figuren 3 und 4 beschriebenen Subnetzwerken 307, 311, 315 entsprechen oder den zu Figur 2 beschriebenen Netzwerk Slices 210b, 211b, 212b oder Instanzen 210a, 211a, 212a dieser Netzwerk Slices entsprechen. Die erste Slice 501 ist hier beispielhaft als Default Slice beschrieben. Natürlich kann auch jede andere der Slices 502, 503, 504 als Default Slice spezifiziert sein. Die dritte Netzentität 513 kann der oben zu Figur 3 und 4 beschriebenen Netzwerkentität 319 entsprechen. Sie kann beispielsweise in der in Figur 1 beschriebenen Management & Instrumentierungsebene 106 angeordnet sein. Die dritte Netzentität 513 kann unter anderen auch die Aufgaben eines HSS gemäß LTE Terminologie wahrnehmen. Die jeweiligen zweiten Netzentitäten, die den Slices 501, 502, 503, 504 zugeordnet sind, können unter anderen auch die Aufgaben einer MME gemäß LTE Terminologie wahrnehmen.

In einer Ausführungsform ist die Struktur des 5G-Netzes 500 ähnlich der Struktur eines LTE-Netzes. Allerdings hat das Heimatnetz mehrere Subnetze 501, 502, 503, 504, welche als Slices bezeichnet werden. Das UE ist somit nicht nur dem Heimatnetz (über die dritte Netzentität 513, vergleichbar dem HSS), sondern auch dem jeweiligen Slice zugeordnet. Die zweiten Netzentitäten können in Analogie zu einem MME gemäß LTE-Terminologie zugleich Teil des Default-Slices 501 sein, was von der genauen Funktion abhängig ist. Die Subnetze 501, 502, 503, 504 können dann jeweils eine Verbindung zur dritten Netzentität 513 in Analogie zu dem HSS gemäß LTE haben, wie hier in Figur 5 dargestellt.

Im Folgenden wird ein beispielhafter Einbuchungsvorgang in das 5G Netz 500 beschrieben.

Das UE 511 verbindet sich über die erste Netzentität 512 mit der zweiten Netzentität des Default Slice 501. Die zweite Netzentität des Default Slice 501 identifiziert das UE 511 anhand der IMSI oder eines damit verknüpften temporären Identifizierungsmerkmals und leitet die Anforderung des UE 511 sich ins Netz einzubuchen zur dritten Netzentität 513.

Zunächst erstellt die dritte Netzentität 513 Parameter, die für die Authentifizierung und in weiterer Folge für sicherheitsrelevante Abläufe, wie Verschlüsselung und Schutz der Integrität der Nachrichten, benötigt werden. Diese sind ein zufälliger Wert RAND, ein Schlüssel K_{ASME}, das erwartete Ergebnis der Authentifizierungsüberprüfung XRES, sowie der Authentication Token AUTN. Diese 4 Parameter werden als sogenannter Authentication Vector bzw. Authentifizierungsvektor von der dritten Netzentität 513 an die zweite Netzentität des Default Slice 501 geschickt. RAND und AUTN werden von der zweiten Netzentität des Default Slice 501 über die erste Netzentität 512 an das UE 511 gesendet. Das UE 511 kann von einem auf der UICC gespeicherten geheimen Schlüssel ebenso einige Parameter, wie z.B. den K_{ASME}, ableiten, die es ihm erlauben, mithilfe des AUTN die Authentizität des Netzes zu überprüfen und aus RAND und K_{ASME} über einen bestimmten Algorithmus den Wert RES zu errechnen. Dieser Wert wird über die erste Netzentität 512 zur zweiten Netzentität der Default Slice 501 geschickt. Sind RES und XRES gleich, schickt die zweite Netzentität der Default Slice 501 eine Nachricht an die dritte Netzentität 513, um dieser mitzuteilen, dass die Authentifizierung des UE 511 positiv abgeschlossen wurde. Die dritte Netzentität 513 schickt daraufhin eine Liste für dieses UE 511 erlaubter Verbindungen, z.B. PDN (Packet Data Network) Subscription Contexts mit QoS (Quality of Service) Profilen, an die zweite Netzentität der Default Slice 501.

Daraufhin baut die zweite Netzentität des Default Slice 501 einen Default Bearer bzw. Träger (z.B. eine IP Verbindung) vom UE 511 zu beispielsweise einem PDN-GW über beispielsweise ein S-GW auf und informiert das UE 511 über den erfolgreichen Einbuchungsvorgang. Nun kann das UE 511 über das Kommunikationsnetzwerk kommunizieren. Weitere Verbindungsanforderungen vom PDN-GW oder UE 511 für zusätzliche Bearer oder Modifikationen der bestehenden Bearer können von der zweiten Netzentität der Default Slice 501 auf Basis der von der dritten Netzentität 513 empfangenen Daten autorisiert werden.

Alle Subnetze (Slices) 501, 502, 503, 504 sind vordefiniert sowohl hinsichtlich der Subnetzstruktur (d.h. welche Funktionalitäten vorhanden sind, welche Netztopologie definiert ist) als auch hinsichtlich der Funktionalität.

Die Netzentitäten II (auf Default Slice 501) und III 513 sind der Control Plane zugeordnet. Die Netzentität I 512 ist sowohl Control Plane als auch User Plane zugeordnet, beispielsweise kann die Signalisierung zwischen Netzentität I 512 und Netzentität II (auf Default Slice 501) auf der Control Plane (CP) laufen, während die Nutzerdaten zwischen Netzentität I 512 und S-GW und PDN-GW auf der User Plane (UP) laufen können. Die Subnetze 501, 502, 503, 504 laufen logisch in der Netzentität III 513 zusammen. Für die Netzentität II gibt es mehrere Möglichkeiten: Falls der Funktionsumfang ähnlich der MME gemäß LTE Terminologie ist, dann ist Netzentität II ein Teil des Default-Slices 501, wie in Figur 5 dargestellt. In jedem Fall gibt es den folgenden 2-stufigen Prozess:
a) Das UE 511 versucht sich einzubuchen, wird wie oben beschrieben von Netzentität II und III 513 voll authentifiziert und entweder einem anderen Slice zugewiesen oder im Default-Slice 501 belassen. Dieser Default Slice 501 kann in einer Ausgestaltung ein Standard Multimedia Broadband Netz sein.
b) Wenn das UE 511 einem anderen Slice zugewiesen wird, wiederholt die Netzentität I 512 den Einbuchungsvorgang in Richtung des zugewiesenen Slice (und der Netzentität II darin) und das UE 511 wird bei Erfolg aus dem Default-Slice 501 abgemeldet.

Dies kann vom Ablauf beispielsweise einem Tracking Area Update gemäß LTE Terminologie entsprechen, also dem Verfahren, das durchgeführt wird, wenn das UE 511 vom Bereich eines MME/S-GW in den eines anderen MME/S-GWs kommt, wobei aber die Netzentität I 512 im Unterschied dazu (wo der eNodeB eines Netzes nur mit einem MME verbunden ist) aufgrund der Subnetz Kennung eine andere Netzentität II auswählen kann.

In einer Implementierungsform kann man es in a) oder b) oder in a) und b) zu einer Authentifizierung des UE 511 kommen. Dies kann etwa ähnlich dem oben beschriebenen Tracking Area Update gestaltet werden.

In einer Implementierungsform besitzt die Netzentität II nur die Funktionalität, die notwendig ist um mit der Netzentität III 513 den Slice zu bestimmen. Dann ist sie nicht Teil des Default-Slices und es erfolgt immer ein Schritt b).

Die Netzentität III 513 identifiziert anhand beispielsweise der IMSI das UE 511 und ordnet dem UE 511 den dazugehörigen Slice, beispielsweise Subnetz I 501 zu. Die Zuweisung des Slice erfolgt aufgrund der in der Netzentität III gespeicherten Daten sowie ggf. unter Einbeziehung von Parametern, die beim Einbuchen vom UE 511 an die Netzentität II übertragen werden. Das können Hardwarekennungen sein (z.B. die IMEI), Operating System Infos oder Applikations-IDs.

In einer alternativen Variante übermittelt das UE 511 die Kennung des entsprechenden Subnetzes im zweiten Schritt b). Das ist die Kennung, die es im ersten Schritt a) von Netzentität III über Netzentität II bekommen hat. Daraufhin wiederholt das UE 511 in Schritt b) den Einbuchungsvorgang in Richtung des zugewiesenen Slice. D.h. in dieser Alternative laufen die Slices im UE 511 zusammen, nicht in Netzentität I 512.

In dieser alternativen Variante kann das UE 511 dann statt der eigenen ID (z.B. IMSI) die eigene ID mit der Slice ID in jedem Verbindungsaufbau mitgeben. Damit kann dann immer die richtige Netzentität II gewählt werden, die Netzentität I 512 muss keinen Status zum UE 511 speichern und das UE 511 kann auch Teil von mehreren Slices sein. Das vereinfacht auch die Prozeduren bei einem Wechsel der Netzentität I 512.

In einer weiteren alternativen Variante übermittelt das UE 511 die Kennung des Subnetzes von Anfang an. Das Subnetz kann beispielsweise ein S-GW (analog), ein PDN-GW (analog) etc. enthalten. Diese Netzentitäten werden für das UE 511 parametriert. Das erfolgt über die Netzentität II bei Bedarf - wenn z.B. ein neuer Bearer aufgebaut wird.

Nach erfolgter Zuweisung des Slices und Einbuchen im selbigen ist die Netzentität II, die als erster Kontaktpunkt für das Einbuchen gedient hat, nicht mehr in den Signalisierungsfluss eingebunden (außer das UE 511 bleibt im Default-Slice 501 und Netzentität II ist Teil des Default-Slices 501).

Nach der Parametrisierung kann das UE 511 über das Subnetz I 501 beispielsweise im Internet kommunizieren oder sich im IMS registrieren und Telekommunikations-Dienste nutzen (z.B. Telefonie).

Die Subnetze I bis n 501, 502, 503, 504 sind voneinander entkoppelt.

Das obige Konzept gilt analog für die Einbuchung in einem fremden Netz. Hier übernimmt analog die Netzentität III die Auswahl des Subnetzes und die Parameter. Im fremden Netz wird die Netzentität II im besuchten Netz dasjenige vordefinierte Subnetz des fremden Netzes auswählen, das dem Heimat-Subnetz entspricht (beispielsweise über Look-Up-Tabelle).

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 4 beschriebene Verfahren 400 oder die zu den Figuren 3 und 5 beschriebenen Vorgänge ausgeführt werden kann, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 400 auszuführen oder die Netzkomponenten der in den Figuren 1 bis 5 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1 bis 5 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung, wie in den Ansprüchen definiert, abzuweichen.

### Bezugszeichenliste

- 100:: 5G Systemarchitektur
- 101:: Zugangsgerät, Kommunikationsendgerät, UE
- 102:: Zugangstechnologie
- 103:: Anwendungsschicht
- 104:: Aktivierungsschicht
- 105:: Infrastruktur & Ressourcenschicht
- 106:: Management & Instrumentierungsschicht

- 200:: 5G Kommunikationsnetzwerk mit mehreren Slices
- 210a:: erste Slice Instanz
- 210b:: erste Netzwerk Slice
- 211a:: zweite Slice Instanz
- 211b:: zweite Netzwerk Slice
- 212a:: dritte Slice Instanz
- 212b:: dritte Netzwerk Slice
- 213:: Slice Komposition
- 221:: abstrahierte Objekte
- 222:: virtuelle Netzwerkfunktionen
- 223:: kombinierte Objekte
- 224:: aggregierte Objekte
- 225:: Objektbibliothek
- 231:: Zugangsknoten
- 232:: Zugangsknoten
- 233:: Zugangsknoten
- 234:: virtueller Netzwerkknoten
- 235:: virtueller Netzwerkknoten
- 236:: virtueller Netzwerkknoten
- 237:: virtueller Netzwerkknoten
- 238:: Computerknoten
- 239:: Computerknoten
- 240:: Computerknoten
- 251:: Infrastrukturdienste
- 300:: Kommunikationssystem
- 301:: Kommunikationsendgerät, z.B. UE
- 302:: Roaming Anfrage mit Identifikation des Kommunikationsendgeräts
- 303:: besuchtes Kommunikationsnetzwerk
- 307:: 1. Subnetzwerk
- 309:: 1. Identifizierungsentität
- 311:: 2. Subnetzwerk
- 313:: 2. Identifizierungsentität
- 315:: n. Subnetzwerk
- 319:: Management-Entität
- 321:: Zuordnung Subnetzwerkkennung zu ID des Kommunikationsendgeräts
- 323:: Zuordnung Subnetzwerk zu Subnetzwerkkennung
- 325:: Prozessor
- 327:: Kommunikationsschnittstelle
- 333:: fremdes Kommunikationsnetzwerk
- 337:: 1. Subnetzwerk des fremden Netzes
- 339:: 1. Identifizierungsentität des fremden Netzes
- 341:: 2. Subnetzwerk des fremden Netzes
- 343:: 2. Identifizierungsentität des fremden Netzes
- 345:: n. Subnetzwerk des fremden Netzes
- 349:: Management-Entität des fremden Netzes
- 338:: Nachricht mit Subnetzwerkkennung des fremden Netzes
- 340:: Konfigurationsanfrage nach Konfiguration des fremden Netzes

- 400:: Verfahren zum Aufbauen einer Roaming-Verbindung
- 401:: erste Schritt: Empfangen
- 402:: zweiter Schritt: Identifizieren
- 403:: dritter Schritt: Empfangen
- 404:: vierter Schritt: Prüfen
- 405:: fünfter Schritt: Aussenden

- 500:: 5G Kommunikationsnetz
- 501:: Default Slice mit Netzentität II bzw. zweiter Netzentität
- 502:: Slice 2
- 503:: Slice 3
- 504:: Slice n
- 511:: UE bzw. Kommunikationsendgerät
- 512:: erste Netzentität bzw. Netzentität I
- 513:: dritte Netzentität bzw. Netzentität III

## Patentansprüche

1. Verfahren (400) zum Aufbauen einer Roaming-Verbindung eines Kommunikationsendgerätes (301) eines fremden Kommunikationsnetzwerkes (333) in einem besuchten Kommunikationsnetzwerk (303), wobei das fremde Kommunikationsnetzwerk (333) und das besuchte Kommunikationsnetzwerk (303) jeweils eine Mehrzahl von Subnetzwerken (307, 311, 315, 337, 341, 345) aufweisen, wobei in jedem Subnetzwerk (307, 311, 315) des besuchten Kommunikationsnetzwerks (303) eine Identifizierungsentität (309, 313, 317) zur Identifizierung eines Kommunikationsendgerätes (301) angeordnet ist, wobei jedem Subnetzwerk (307, 311, 315, 337, 341, 345) des jeweiligen Kommunikationsnetzwerkes (303, 333) eine Subnetzwerk-Kennung (SubNW-ID1, SubNW-ID2, SubNW-IDn) zugeordnet ist, wobei in dem besuchten Kommunikationsnetzwerk (303) eine Netzwerk-Management-Entität (319) angeordnet ist, welche eine Zuordnung (321) von Subnetzwerken (307, 311, 315) zu Kommunikationsgeräten (301) verwaltet, wobei das Verfahren (400) die folgenden Schritte umfasst:
Empfangen (401) einer Roaming-Verbindungsanfrage (302) von dem Kommunikationsendgerät (301) des fremden Kommunikationsnetzwerkes (333) durch eine erste Identifizierungsentität (309) eines ersten Subnetzwerkes (307) des besuchten Kommunikationsnetzwerks (303), wobei die Roaming-Verbindungsanfrage (302) eine Identität (UE-ID) des Kommunikationsgerätes (301) aufweist;
Identifizieren (402) des Kommunikationsendgerätes (301) durch die erste Identifizierungsentität (309) des besuchten Kommunikationsnetzwerkes (303) auf der Basis der Identifikation (UE-ID) des Kommunikationsendgerätes (301);
Anfordern und Empfangen (403, 338) einer fremden Subnetzwerk-Kennung (SubNW-IDx) eines fremden Subnetzwerkes (337) des fremden Kommunikationsnetzwerkes (333) durch die erste Identifizierungsentität (309) des besuchten Kommunikationsnetzwerkes (303) von einer fremden Management-Entität (349) des fremden Kommunikationsnetzwerkes (303);
Prüfen auf der Basis (404) der fremden Subnetzwerk-Kennung (SubNW-IDx) durch die Netzwerk-Management-Entität (319) oder durch die erste Identifizierungsentität (309), ob ein entsprechendes Subnetzwerk (307, 311, 315) des besuchten Kommunikationsnetzes (303) dem fremden Subnetzwerk (337), welches durch die fremde Subnetzwerk-Kennung (SubNW-IDx) angezeigt ist, entspricht; und
Aussenden (405, 340) einer Konfigurationsanfrage (Cfg-Req) nach einer Konfiguration des fremden Subnetzwerkes (333) durch die erste Identifizierungsentität (309) oder die Netzwerk-Management-Entität (319) des besuchten Kommunikationsnetzwerkes (303) an das fremde Kommunikationsnetzwerk (333), falls kein entsprechendes Subnetzwerk (307, 311, 315) des besuchten Kommunikationsnetzes (303) dem fremden Subnetzwerk (337) entspricht.

2. Verfahren (400) nach Anspruch 1, mit:
Empfangen der Konfiguration des fremden Subnetzwerkes (337) durch die erste Identifizierungsentität (309) oder die Netzwerk-Management-Entität (319) des besuchten Kommunikationsnetzwerkes (303) ansprechend auf das Aussenden (340) der Konfigurationsanfrage (Cfg-Req).

3. Verfahren (400) nach Anspruch 2, mit:
Prüfen auf der Basis der empfangenen Konfiguration durch die Netzwerk-Management-Entität (319) oder durch die erste Identifizierungsentität (309), ob ein entsprechendes Subnetzwerk (307, 311, 315) des besuchten Kommunikationsnetzwerkes (303) dem fremden Subnetzwerk (337) entspricht.

4. Verfahren (400) nach Anspruch 2 oder 3, mit:
Konfigurieren eines Subnetzwerkes (307, 311, 315) des besuchten Kommunikationsnetzwerkes (303) gemäß der empfangenen Konfiguration, um ein entsprechendes Subnetzwerk (307) zu erhalten, das dem fremden Subnetzwerk (337) entspricht.

5. Verfahren (400) nach Anspruch 4, wobei die Konfiguration zumindest eine Funktion und/oder eine Topologie des fremden Subnetzwerkes (337) des fremden Kommunikationsnetzwerkes (333) anzeigt, und wobei in dem Schritt des Konfigurierens die Funktion auf einer Hardware-Ressource eines Subnetzwerkes (307, 311, 315) des besuchten Kommunikationsnetzwerkes (303) implementiert oder instanziiert wird, und/oder wobei Hardware-Ressourcen des besuchten Kommunikationsnetzwerkes (303) entsprechend der Topologie verschaltet werden, um ein entsprechendes Subnetzwerk (307) des besuchten Kommunikationsnetzwerkes (303) zu erhalten, das dem fremden Subnetzwerk (337) entspricht.

6. Verfahren (400) nach Anspruch 5, wobei die eine Funktion eine vordefinierte Standard-Funktion eines Subnetzwerkes ist.

7. Verfahren (400) nach Anspruch 5, wobei die Konfiguration zumindest eine der folgenden Funktionen anzeigt: Authentifikation, Charging, Policy, Mobility Management, Security, Codecs, Kompressionsalgorithmen, Transcoder, Multimedia Resource Functions, insbesondere Speech Recognition, Voice Mail System, Text to Speech Conversion, Signalisierungsprotokoll, Protokollerweiterung, Protokollumsetzung, Übertragungsprotokoll, Routingfunktion, Scheduling.

8. Verfahren (400) nach einem der vorstehenden Ansprüche, mit:
Aufbauen einer Kommunikationsverbindung über das entsprechende Subnetzwerk (307) des besuchten Kommunikationsnetzwerkes (303).

9. Verfahren (400) nach einem der vorstehenden Ansprüche, mit:
Bereitstellen des entsprechenden Subnetzwerkes (307) für künftige Kommunikationen über das besuchte Kommunikationsnetzwerk (303) durch die Netzwerk-Management-Entität (319) des besuchten Kommunikationsnetzwerkes (303).

10. Verfahren (400) nach einem der vorstehenden Ansprüche, wobei der Schritt des Empfangens (338) der fremden Subnetzwerk-Kennung (SubNW-IDx) das Empfangen (338) der fremden Subnetzwerk-Kennung (SubNW-IDx) durch die erste Identifizierungsentität (309), insbesondere von dem Kommunikationsendgerät (301) oder von dem fremden Kommunikationsnetzwerk (333), und das Weiterleiten der fremden Subnetzwerkkennung (SubNW-IDx) durch die erste Identifizierungsentität (309) an die Netzwerk-Management-Entität (319) umfasst.

11. Verfahren (400) nach einem der vorstehenden Ansprüche, wobei das besuchte Kommunikationsnetzwerk (303) ein Netzwerk einer fünften Generation (5G) oder einer weiteren Generation ist, und wobei die Subnetzwerke (307, 311, 315) Slices des besuchten Kommunikationsnetzwerkes (303) sind.

12. Verfahren (400) nach einem der vorstehenden Ansprüche, wobei die Konfigurationsanfrage (Cfg-Req) die Identität (UE-ID) des Kommunikationsendgerätes (301), insbesondere eine Hardware-Kennung des Kommunikationsendgerätes (301) wie IMSI oder IMEI oder eID umfasst.

13. Verfahren (400) nach einem der vorstehenden Ansprüche, wobei die Zuordnung von Subnetzwerk-Kennungen (SubNW-ID) zu Subnetzwerken (307, 311, 315) in der Netzwerk-Management-Entität (319) gespeichert ist.

14. Verfahren (400) nach einem der vorstehenden Ansprüche, wobei die Prüfung, ob ein entsprechendes Subnetzwerk (307, 311, 315) des besuchten Kommunikationsnetzes (303) dem fremden Subnetzwerk (337) entspricht, auf der Basis einer Korrespondenztabelle mit einer Zuordnung von Subnetzwerk-Kennungen (SubNW-ID) zu Subnetzwerken (307, 311, 315) und/oder auf Basis einer Funktionstabelle einer Zuordnung von Funktionen zu Subnetzwerken (307, 311, 315) durch die Netzwerk-Management-Entität (319) durchgeführt wird.

15. Netzwerk-Management-Entität (319) zum Aufbau einer Roaming-Verbindung eines Kommunikationsendgerätes (319) eines fremden Kommunikationsnetzwerkes (333) in einem besuchten Kommunikationsnetzwerk (303), wobei das fremde Kommunikationsnetzwerk (333) und das besuchte Kommunikationsnetzwerk (303) jeweils eine Mehrzahl von Subnetzwerken (307, 311, 315, 337, 341, 345) aufweisen, wobei in jedem Subnetzwerk (307, 311, 315) des besuchten Kommunikationsnetzwerks (303) eine Identifizierungsentität (309, 313, 317) zur Identifizierung eines Kommunikationsendgerätes (301) angeordnet ist, wobei jedem Subnetzwerk (307, 311, 315, 337, 341, 345) des jeweiligen Kommunikationsnetzwerkes (303, 333) eine Subnetzwerk-Kennung (SubNW-ID1, SubNW-ID2, SubNW-IDn) zugeordnet ist,
wobei die Netzwerk-Management-Entität (319) die folgenden Merkmale aufweist:
einen Speicher (323) mit einer Zuordnung von Subnetzwerk-Kennungen (SubNW-ID) zu Subnetzwerken (307, 311, 315) des besuchten Kommunikationsnetzwerkes (303);
eine Kommunikationsschnittstelle (327) zum Anfordern und Empfangen (338) einer fremden Subnetzwerk-Kennung (SubNW-IDx) des fremden Kommunikationsnetzwerks (333) von einer fremden Management-Entität (349) des fremden Kommunikationsnetzwerkes (303); und
einen Prozessor (325), welcher ausgebildet ist, auf der Basis der fremden Subnetzwerk-Kennung (SubNW-IDx) und den vorgespeicherten Subnetzwerk-Kennungen (SubNW-ID) zu prüfen, ob ein entsprechendes Subnetzwerk (307, 311, 315) des besuchten Kommunikationsnetzwerkes (303) einem fremden Subnetzwerk (337) des fremden Kommunikationsnetzwerks (333) entspricht; wobei
die Kommunikationsschnittstelle (327) ausgebildet ist, eine Konfigurationsanfrage (Cfg-Req) nach einer Konfiguration des fremden Subnetzwerkes (337) an das fremde Kommunikationsnetzwerk (333) auszusenden, falls kein entsprechendes Subnetzwerk (307, 311, 315) des besuchten Kommunikationsnetzwerkes (303) dem fremden Subnetzwerk (337) entspricht.

16. Netzwerk-Management-Entität (319) nach Anspruch 15, wobei die Kommunikationsschnittstelle (327) ausgebildet ist, ansprechend auf das Aussenden (340) der Konfigurationsanfrage (Cfg-Req) eine Konfiguration des fremden Subnetzwerkes (337) zu empfangen, und wobei die Netzwerk-Management-Entität (319) ausgebildet ist, insbesondere mittels der Kommunikationsschnittstelle (327) und des Prozessors (325) ein Subnetzwerk (307) des besuchten Kommunikationsnetzwerkes (303) gemäß der empfangenen Konfiguration zu konfigurieren, um ein entsprechendes Subnetzwerk (307) zu erhalten, das dem fremden Subnetzwerk (337) entspricht.

## Claims

1. A method (400) for establishing a roaming connection of a communication terminal (301) of a foreign communication network (333) in a visited communication network (303), the foreign communication network (333) and the visited communication network (303) each comprising a plurality of sub-networks (307, 311, 315, 337, 341, 345), wherein an identification entity (309, 313, 317) for identification of a communication terminal (301) is arranged in each sub-network (307, 311, 315) of the visited communication network (303), wherein a sub-network identifier (SubNW-ID1, SubNW-ID2, SubNW-IDn) is assigned to each sub-network (307, 311, 315, 337, 341, 345) of the respective communication network (303, 333), wherein in the visited communication network (303), a network management entity (319) is arranged which manages assignment (321) of sub-networks (307, 311, 315) to communication devices (301), the method (400) comprising the following steps:
receiving (401), by a first identification entity (309) of a first sub-network (307) of the visited communication network (303), a roaming connection request (302) from the communication terminal (301) of the foreign communication network (333), the roaming connection request (302) having an identifier (UE-ID) of the communication terminal (301);
identifying (402), by the first identification entity (309) of the visited communication network (303), the communication terminal (301) based on the identifier (UE-ID) of the communication terminal (301);
requesting and receiving (403, 338) a foreign sub-network identifier (SubNW-IDx) of a foreign sub-network (337) of the foreign communication network (333) by the first identification entity (309) of the visited communication network (303) from a foreign management entity (349) of the foreign communication network (303);
verifying, by the network management entity (319) or by the first identification entity (309), based (404) on the foreign sub-network identifier (SubNW-IDx), whether a respective sub-network (307, 311, 315) of the visited communication network (303) corresponds to the foreign sub-network (337) indicated by the foreign sub-network identifier (SubNW-IDx); and
sending (405, 340), by the first identification entity (309) or the network management entity (319) of the visited communication network (303), a configuration request (Cfg-Req) for a configuration of the foreign sub-network (333) to the foreign communication network (333) in case no respective sub-network (307, 311, 315) of the visited communication network (303) corresponds to the foreign sub-network (337).

2. The method (400) according to claim 1, comprising: receiving, by the first identification entity (309) or the network management entity (319) of the visited communication networks (303), the configuration of the foreign sub-network (337) in response to the sending (340) of the configuration request (Cfg-Req).

3. The method (400) according to claim 2, comprising: verifying, by the network management entity (319) or by the first identification entity (309), based on the received configuration, whether a respective sub-network (307, 311, 315) of the visited communication network (303) corresponds to the foreign sub-network (337).

4. The method (400) according to claim 2 or 3, comprising: configuring a sub-network (307, 311, 315) of the visited communication network (303) according to the received configuration in order to obtain a respective sub-network (307) that corresponds to the foreign sub-network (337).

5. The method (400) according to claim 4, wherein the configuration displays at least one function and/or topology of the foreign sub-network (337) of the foreign communication network (333), and wherein at the configuration step, the function is implemented or instantiated on a hardware resource of a sub-network (307, 311, 315) of the visited communication network (303), and/or wherein hardware resources of the visited communication network (303) are interconnected according to the topology in order to obtain a respective sub-network (307) of the visited communication network (303) that corresponds to the foreign sub-network (337) .

6. The method (400) according to claim 5, wherein the one function is a predefined standard function of a sub-network.

7. The method (400) according to claim 5, wherein the configuration displays at least one of the following functions: authentication, charging, policy, mobility management, security, codecs, compression algorithms, transcoder, or multimedia resource functions, in particular speech recognition, voice mail system, text to speech conversion, signaling protocol, protocol extension, protocol conversion, transmission protocol, routing function, scheduling.

8. The method (400) according to any one of the preceding claims, comprising:
establishing a communication connection through the respective sub-network (307) of the visited communication network (303).

9. The method (400) according to any one of the preceding clams, comprising:
providing, by the network management entity (319) of the visited communication network (303), the respective sub-network (307) for future communications through the visited communication network (303).

10. The method (400) according to any one of the preceding claims, wherein the step of receiving (338) the foreign sub-network identifier (SubNW-IDx) comprises receiving (338) of the foreign sub-network identifier (SubNW-IDx) by the first identification entity (309), in particular from the communication terminal (301) or from the foreign communication network (333), and forwarding the foreign sub-network identifier (SubNW-IDx) by the first identification entity (309) to the network management entity (319).

11. The method (400) according to any one of the preceding claims, wherein the visited communication network (303) is a fifth generation network (5G) or that of a further generation, and wherein the sub-networks (307, 311, 315) are slices of the visited communication network (303).

12. The method (400) according to any one of the claims, wherein the configuration request (Cfg-Req) comprises the identifier (UE-ID) of the communication terminal (301), in particular a hardware identifier of the communication terminal (301), such a IMSI or IMEI or eID.

13. The method (400) according to any one of the preceding claims, wherein assignment of sub-network identifiers (SubNW-ID) to sub-networks (307, 311, 315) is saved in the network management entity (319).

14. The method (400) according to any one of the preceding claims, wherein verifying whether a respective sub-network (307, 311, 315) of the visited communication network (303) corresponds to the foreign sub-network (337) is performed based on a correspondence table with assignment of sub-network identifiers (SubNW-ID) to sub-networks (307, 311, 315) and/or based on a function table of assignment of functions to sub-networks (307, 311, 315) by the network management entity (319).

15. A network management entity (319) for establishing a roaming connection of a communication terminal (319) of a foreign communication network (333) in a visited communication network (303), the foreign communication network (333) and the visited communication network (303) each comprising a plurality of sub-networks (307, 311, 315, 337, 341, 345), wherein an identification entity (309, 313, 317) for identification of a communication terminal (301) is arranged in each sub-network (307, 311, 315) of the visited communication network (303), wherein a sub-network identifier (SubNW-ID1, SubNW-ID2, SubNW-IDn) is assigned to each sub-network (307, 311, 315, 337, 341, 345) of the respective communication network (303, 333), wherein the network management entity (319) comprises the following features:
a memory (323) with an assignment of sub-network identifiers (SubNW-ID) to sub-networks (307, 311, 315) of the visited communication network (303);
a communication interface (327) for requesting and receiving (338) a foreign sub-network identifier (SubNW-IDx) of the foreign communication network (333) from a foreign management entity (349) of the foreign communication network (303); and
a processor (325) designed to verify, based on the foreign sub-network identifier (SubNW-IDx) and the pre-saved sub-network identifiers (SubNW-ID), whether a respective sub-network (307, 311, 315) of the visited communication network (303) corresponds to a foreign sub-network (337) of the foreign communication network (333); wherein
the communication interface (327) is configured to send a configuration request (Cfg-Req) for a configuration of the foreign sub-network (337) to the foreign communication network (333) in case no respective sub-network (307, 311, 315) of the visited communication network (303) corresponds to the foreign sub-network (337).

16. The network management entity (319) according to claim 15, wherein the communication interface (327) is designed to receive a configuration of the foreign sub-network (337) in response to the sending (340) of the configuration request (Cfg-Req), and wherein the network management entity (319) is designed to configure a sub-network (307) of the visited communication network (303) according to the received configuration, in particular by means of the communication interface (327) and the processor (325), in order to obtain a respective sub-network (307) that corresponds to the foreign sub-network (337).

## Revendications

1. Procédé (400) pour établir une connexion en itinérance d'un terminal de communication (301) d'un réseau de communication étranger (333) dans un réseau de communication visité (303), dans lequel le réseau de communication étranger (333) et le réseau de communication visité (303) présentent chacun une pluralité de sous-réseaux (307, 311, 315, 337, 341, 345), dans lequel dans chaque sous-réseau (307, 311, 315) du réseau de communication visité (303) est disposée une entité d'identification (309, 313, 317) pour identifier un terminal de communication (301), dans lequel chaque sous-réseau (307, 311, 315, 337, 341, 345) du réseau de communication respectif (303, 333) se voit attribuer un identifiant de sous-réseau (SubNW-ID1, SubNW-ID2, SubNW-IDn), dans lequel une entité de gestion de réseau (319) est disposée dans le réseau de communication visité (303), qui attribue (321) des sous-réseaux (307, 311, 315) à des dispositifs de communication (301), dans lequel le procédé (400) comprend les étapes suivantes de:
réception (401) d'une demande de connexion en itinérance (302) provenant du terminal de communication (301) du réseau de communication étranger (333) via une première entité d'identification (309) d'un premier sous-réseau (307) du réseau de communication visité (303), dans lequel la demande de connexion en itinérance (302) présente une identité (UE-ID) du dispositif de communication (301);
identification (402) du terminal de communication (301) via la première entité d'identification (309) du réseau de communication visité (303) sur la base de l'identification (UE-ID) du terminal de communication (301);
demande et réception (403, 338) d'un identifiant de sous-réseau externe (SubNW-IDx) d'un sous-réseau externe (337) du réseau de communication externe (333) par la première entité d'identification (309) du réseau de communication visité (303) à partir d'une entité de gestion étrangère (349) du réseau de communication étranger (303);
vérification sur la base (404) de l'identifiant de sous-réseau étranger (SubNW-IDx) par l'entité de gestion de réseau (319) ou par la première entité d'identification (309) si un sous-réseau correspondant (307, 311, 315) du réseau de communication visité (303) correspond au sous-réseau étranger (337), qui est indiqué par l'identifiant de sous-réseau étranger (SubNW-IDx); et
envoi (405, 340) d'une demande de configuration (Cfg-Req) pour une configuration du sous-réseau étranger (333) par la première entité d'identification (309) ou l'entité de gestion de réseau (319) du réseau de communication visité (303) au réseau de communication étranger (333), au cas où aucun sous-réseau correspondant (307, 311, 315) du réseau de communication visité (303) ne correspond au sous-réseau étranger (337).

2. Procédé (400) selon la revendication 1, comprenant de : recevoir la configuration du sous-réseau étranger (337) par la première entité d'identification (309) ou entité de gestion de réseau (319) du réseau de communication visité (303) en réponse à l'envoi (340) de la demande de configuration (Cfg-Req).

3. Procédé (400) selon la revendication 2, comprenant de: vérifier sur la base de la configuration reçue par l'entité de gestion de réseau (319) ou par la première entité d'identification (309) si un sous-réseau correspondant (307, 311, 315) du réseau de communication visité (303) correspond au sous-réseau étranger (337).

4. Procédé (400) selon la revendication 2 ou 3, comprenant de:
configurer un sous-réseau (307, 311, 315) du réseau de communication visité (303) selon la configuration reçue afin d'obtenir un sous-réseau correspondant (307) qui correspond au sous-réseau étranger (337).

5. Procédé (400) selon la revendication 4, dans lequel la configuration affiche au moins une fonction et/ou une topologie du sous-réseau étranger (337) du réseau de communication étranger (333), et dans lequel à l'étape de configuration la fonction est implémentée ou instanciée sur une ressource matérielle d'un sous-réseau (307, 311, 315) du réseau de communication visité (303), et/ou dans lequel les ressources matérielles du réseau de communication visité (303) sont interconnectées selon la topologie afin d'obtenir un sous-réseau correspondant (307) du réseau de communication visité (303) qui correspond au sous-réseau étranger (337).

6. Procédé (400) selon la revendication 5, dans lequel la fonction unique est une fonction standard prédéfinie d'un sous-réseau.

7. Procédé (400) selon la revendication 5, dans lequel la configuration indique au moins une des fonctions suivantes: authentification, facturation, politique, gestion de la mobilité, sécurité, codecs, algorithmes de compression, transcodeurs, fonctions de ressources multimédias, notamment reconnaissance vocale, système de messagerie vocale, conversion de texte en parole, protocole de signalisation, extension de protocole, implémentation de protocole, protocole de transmission, fonction de routage, planification.

8. Procédé (400) selon une des revendications précédentes, comprenant de:
établir une connexion de communication via le sous-réseau correspondant (307) du réseau de communication visité (303).

9. Procédé (400) selon une des revendications précédentes, comprenant de:
fournir le sous-réseau correspondant (307) pour de futures communications via le réseau de communications visité (303) par l'entité de gestion de réseau (319) du réseau de communications visité (303).

10. Procédé (400) selon une quelconque des revendications précédentes, dans lequel l'étape de
Réception (338) de l'identifiant étranger de sous-réseau (SubNW-IDx) comprend la réception (338) de l'identifiant de sous-réseau étranger (SubNW-IDx) par la première entité d'identification (309), notamment depuis le terminal de communication (301) ou depuis le réseau de communication externe (333), et la retransmission de l'identifiant de communication externe de sous-réseau (SubNW-IDx) par la première entité d'identification (309) à l'entité de gestion de réseau (319).

11. Procédé (400) selon une quelconque des revendications précédentes, dans lequel le réseau de communication visité (303) est un réseau d'une cinquième génération (5G) ou d'une génération supplémentaire, et dans lequel les sous-réseaux (307, 311, 315) sont des tranches du réseau de communication visité (303).

12. Procédé (400) selon une quelconque des revendications précédentes, dans lequel la demande de configuration (Cfg-Req) comprend l'identité (UE-ID) du terminal de communication (301), notamment un identifiant matériel du terminal de communication (301) tel que IMSI ou IMEI ou elD.

13. Procédé (400) selon une des revendications précédentes, dans lequel l'attribution d'identifiants de sous-réseau (SubNW-ID) aux sous-réseaux (307, 311, 315) est mémorisée dans l'entité de gestion de réseau (319).

14. Procédé (400) selon une des revendications précédentes, dans lequel la vérification si un sous-réseau correspondant (307, 311, 315) du réseau de communication visité (303) correspond au sous-réseau étranger (337), sur la base d'une table de correspondance avec une affectation d'identifiants de sous-réseau (SubNW-ID) à des sous-réseaux (307, 311, 315) et/ou sur la base d'une table de fonctions une attribution de fonctions aux sous-réseaux (307, 311, 315) est effectuée par l'entité de gestion de réseau (319).

15. Entité de gestion de réseau (319) pour établir une connexion en itinérance d'un terminal de communication (319) d'un réseau de communication étranger (333) dans un réseau de communication visité (303), dans lequel le réseau de communication étranger (333) et le réseau de communication visité (303) présentent respectivement une pluralité de sous-réseaux (307, 311, 315, 337, 341, 345), dans lequel dans chaque sous-réseau (307, 311, 315) du réseau de communication visité (303) une entité d'identification (309, 313, 317) pour identifier un terminal de communication (301) est disposé, dans lequel chaque sous-réseau (307, 311, 315, 337, 341, 345) du réseau de communication respectif (303, 333) se voit attribuer un identifiant de sous-réseau (SubNW-ID1, SubNW-ID2, SubNW-IDn), dans lequel l'entité de gestion de réseau (319) présente les caractéristiques suivantes :
une mémoire (323) avec une affectation d'identifiants de sous-réseau (SubNW-ID) aux sous-réseaux (307, 311, 315) du réseau de communication visité (303);
une interface de communication (327) pour demander et recevoir (338) un identifiant de sous-réseau étranger (SubNW-IDx) du réseau de communication étranger (333) depuis une entité de gestion étrangère (349) du réseau de communication étranger (303); et
un processeur (325) qui est conçu pour vérifier sur la base de l'identifiant de sous-réseau étranger (SubNW-IDx) et des identifiants de sous-réseau préenregistrés (SubNW-ID) si un sous-réseau correspondant (307, 311, 315) du réseau de communication visité (303) est un sous-réseau étranger (337) du réseau de communication étranger (333);
dans lequel l'interface de communication (327) est conçue pour envoyer une demande de configuration (Cfg-Req) pour une configuration du sous-réseau étranger (337) au réseau de communication étranger (333), au cas où aucun sous-réseau correspondant (307, 311, 315) du réseau de communication visité (303) ne correspond au sous-réseau étranger (337).

16. Entité de gestion de réseau (319) selon la revendication 15, dans laquelle l'interface de communication (327) est configurée pour recevoir une configuration du sous-réseau étranger (337) en réponse à la transmission (340) de la demande de configuration (Cfg-Req), et l'entité de gestion de réseau (319) est configurée, notamment au moyen de l'interface de communication (327) et du processeur (325) pour configurer le sous-réseau (307) du réseau de communication visité (303) selon la configuration reçue afin d'obtenir un sous-réseau correspondant (307) qui correspond au sous-réseau étranger (337).
